# EUROPEAN PATENT SPECIFICATION

(11) **EP 3 917 086 B1**
(45) Date of publication and mention of the grant of the patent: **05.04.2023**
(21) Application number: 21175795.0
(22) Date of filing: 25.05.2021
(51) Int. Cl.: H04L 41/0213, H04L 41/0806, H04L 41/0895, H04L 41/122, H04L 41/40, H04L 43/0876, H04L 41/082, H04L 41/0853, H04L 41/0681, H04L 43/20

(54) **NETWORK TOPOLOGY DISCOVERY METHOD, DEVICE, AND SYSTEM**
NETZWERKTOPOLOGIEENTDECKUNGSVERFAHREN, -VORRICHTUNG UND -SYSTEM
PROCÉDÉ, DISPOSITIF ET SYSTÈME DE DÉCOUVERTE DE TOPOLOGIE DE RÉSEAU

(30) Priority: 30.05.2020 CN 202010480856; 19.08.2020 CN 202010839707
(43) Date of publication of application: 01.12.2021
(73) Proprietor: HUAWEI TECHNOLOGIES CO., LTD., Shenzhen, Guangdong 518129, P.R. (CN)
(72) Inventor: ZHENG, Juan, Shenzhen 518129 (CN); LIAO, Ting, Shenzhen 518129 (CN); YANG, Qing, Shenzhen 518129 (CN)
(74) Representative: Gill Jennings & Every LLP

(56) References cited:
- EP-A1- 3 531 634
- US-A1- 2019 140 971
- ALHARBI TALAL ET AL: "The (In)Security of Virtualization in Software Defined Networks", IEEE ACCESS, vol. 7, 20 May 2019 (2019-05-20), pages 66584-66594, XP011728301, DOI: 10.1109/ACCESS.2019.2918101 [retrieved on 2019-06-03]

## Description

### TECHNICAL FIELD

This application relates to the field of communications technologies, and in particular, to a network topology discovery method, device, and system.

### BACKGROUND

Network slicing is an on-demand networking mode. Specifically, a network slice is a virtual network separated from a physical network. A plurality of network slices may be separated from a same physical network. Logical isolation may be implemented between network slices, to adapt to various types of applications.

The link layer discovery protocol (Link Layer Discovery Protocol, LLDP) is a link layer (layer 2) discovery protocol defined by the Institute of Electrical and Electronics Engineers ((Institute of Electrical and Electronics Engineers, IEEE) 802.1AB). A network device may advertise a status of the network device to another network device by sending, in a network, an LLDP packet carrying a link layer discovery protocol data unit (Link Layer Discovery Protocol Data Unit, LLDPDU). Therefore, the LLDP is a protocol that enables network devices in the network to discover each other, advertise their own statuses, and exchange information.

In an actual application scenario, the network device in the network obtains status information of a neighboring network device of the network device through an LLDP packet. In addition, the network device may send the obtained status information of the neighboring network device and status information of the network device to a management device. In this way, the management device can determine topology information of the network based on the obtained status information of the plurality of network devices. However, when the network includes a network slice, the management device cannot determine topology information of the network slice based on the obtained status information of the plurality of network devices.

XP11728301A relates to the security of virtualization in software defined network.

### SUMMARY

The present invention is defined by the claims. Embodiments and aspects not falling within the scope of the claims are exemplary. This application provides a network topology discovery method, device, and system, so that a management device can obtain slice information of a managed device.

According to a first aspect, a network topology discovery method is provided. The method includes: A second network device receives a first LLDP packet sent by a first network device. The first LLDP packet includes first slice information, and the first slice information is used to indicate a network slice to which a first port of the first network device belongs. Then, the second network device sends the first slice information and second slice information to a management device. The second slice information is used to indicate a network slice to which a second port of the second network device belongs.

Based on the solution provided in this application, slice information can be advertised between LLDP neighboring devices, and the LLDP neighboring devices can report the slice information to the management device, to help the management device obtain slice information of a managed device in a timely manner and determine topology information of the network slices.

In a possible implementation of the first aspect, before the second network device sends the first slice information and the second slice information to the management device, the method includes: The second network device receives a request message sent by the management device. The request message is used by the management device to request slice information from a network device managed by the management device.

In another possible implementation of the first aspect, before the second network device sends the first slice information and the second slice information to the management device, the method includes: The second network device sends a first notification message to the management device. The first notification message includes the first slice information and the second slice information.

In still another possible implementation of the first aspect, the method further includes: The second network device receives a third LLDP packet sent by the first network device. The third LLDP packet includes third slice information, the third slice information is used to indicate a network slice to which the first port of the first network device belongs at a second moment, the first slice information is used to indicate a network slice to which the first port of the first network device belongs at a first moment, and the first moment is different from the second moment. The second network device sends the third slice information to the management device.

In still another possible implementation of the first aspect, that the second network device sends the third slice information to the management device includes: The second network device sends a second notification message to the management device. The second notification message includes the third slice information.

In still another possible implementation of the first aspect, the method further includes: The second network device sends a second LLDP packet to the first network device. The second LLDP packet includes the second slice information.

In still another possible implementation of the first aspect, the first slice information includes a first slice identifier, the first slice identifier is used to identify the network slice to which the first port belongs, the second slice information includes a second slice identifier, the second slice identifier is used to identify the network slice to which the second port belongs, the first port is a receive port of the second LLDP packet, and the second port is a receive port of the first LLDP packet. The method further includes: The second network device determines whether the first slice identifier is the same as the second slice identifier.

In still another possible implementation of the first aspect, the method further includes: The second network device generates alarm information in response to that the first slice identifier is different from the second slice identifier. The alarm information is used to indicate that slice information of the first port does not match slice information of the second port.

In still another possible implementation of the first aspect, the method further includes: The second network device stores the first slice information in response to that the first slice identifier is the same as the second slice identifier.

According to a second aspect, a network topology discovery method is provided. The method includes: A management device receives first slice information and second slice information that are sent by a second network device. The first slice information is used to indicate a network slice to which a first port of the first network device belongs, and the second slice information is used to indicate a network slice to which a second port of the second network device belongs. In addition, the management device receives the first slice information and the second slice information that are sent by the first network device. Then, the management device determines, based on the first slice information and the second slice information that are received from the first network device and the first slice information and the second slice information that are received from the second network device, topology information of the network slices to which the first port and the second port belong.

Based on the solution provided in this application, an LLDP neighboring device can report slice information to the management device, to help the management device obtain slice information of a managed device and determine the topology information of the network slices in a timely manner.

In a possible implementation of the second aspect, before the management device receives the first slice information and the second slice information that are sent by a second network device, the method further includes: The management device sends a request message to the second network device. The request message is used by the management device to request slice information from a network device managed by the management device.

In another possible implementation of the second aspect, that a management device receives first slice information and second slice information that are sent by a second network device includes: The management device receives a first notification message sent by the second network device. The first notification message includes the first slice information and the second slice information.

In still another possible implementation of the second aspect, the method further includes: The management device receives third slice information sent by the second network device. The third slice information is used to indicate a network slice to which the first port of the first network device belongs at a second moment, the first slice information is used to indicate a network slice to which the first port of the first network device belongs at a first moment, and the first moment is different from the second moment. The management device updates, based on the third slice information and the second slice information, the topology information of the network slices to which the first port and the second port belong.

In yet another possible implementation of the second aspect, that the management device receives third slice information sent by the second network device includes: The management device receives a second notification message sent by the second network device. The second notification message includes the third slice information.

In still yet another possible implementation of the second aspect, the first network device is an LLDP neighbor of the second network device.

In the first aspect or the second aspect, optionally, the first slice information includes a first slice identifier, the first slice identifier is used to identify the network slice to which the first port belongs, the second slice information includes a second slice identifier, the second slice identifier is used to identify the network slice to which the second port belongs, and the first slice identifier is the same as the second slice identifier.

In the first aspect or the second aspect, optionally, the first slice information further includes a first device identifier and a first port identifier, the first device identifier is used to indicate the first network device, the first port identifier is used to indicate the first port of the first network device, the second slice information further includes a second device identifier and a second port identifier, the second device identifier is used to indicate the second network device, and the second port identifier is used to indicate the second port of the second network device.

In the first aspect or the second aspect, optionally, the first slice information further includes a first port bandwidth, the first port bandwidth is used to indicate an available bandwidth of the first port, the second slice information further includes a second port bandwidth, and the second port bandwidth is used to indicate an available bandwidth of the second port.

In the first aspect or the second aspect, optionally, the topology information of the network slice to which the first port and the second port belong includes the first slice identifier.

According to a third aspect, a second network device is provided. The second network device has a function of implementing actions of the second network device in the foregoing methods. The function may be implemented based on hardware, or may be implemented based on hardware executing corresponding software. The hardware or the software includes one or more modules corresponding to the foregoing function.

In a possible design, a structure of the second network device includes a processor and an interface. The processor is configured to support the second network device in implementing corresponding functions in the foregoing methods. The interface is configured to: support communication between the second network device and another network device, and receive information or instructions in the foregoing methods from the another network device. The interface is further configured to support communication between the second network device and the management device. The second network device may further include a memory. The memory is configured to be coupled to the processor, and store program instructions and data that are necessary for the second network device.

In another possible design, the second network device includes a processor, a transmitter, a receiver, a random access memory, a read-only memory, and a bus. The processor is coupled to the transmitter, the receiver, the random access memory, and the read-only memory through the bus. When the second network device needs to run, a basic input/output system built into a read-only memory or a bootloader in an embedded system is used to boot the system to start, and boot the second network device to enter a normal running state. After the second network device enters the normal running state, an application program and an operating system are run in the random access memory, to enable the processor to perform the method in any one of the first aspect or the possible implementations of the first aspect.

According to a fourth aspect, a second network device is provided. The second network device includes a main control board and an interface board, and may further include a switching board. The second network device is configured to perform the method in any one of the first aspect or the possible implementations of the first aspect. Specifically, the second network device includes modules configured to perform the method in any one of the first aspect or the possible implementations of the first aspect.

According to a fifth aspect, a second network device is provided. The second network device includes a controller and a first forwarding sub-device. The first forwarding sub-device includes an interface board, and may further include a switching board. The first forwarding sub-device is configured to perform a function of the interface board in the fourth aspect, and may further perform a function of the switching board in the fourth aspect. The controller includes a receiver, a processor, a transmitter, a random access memory, a read-only memory, and a bus. The processor is coupled to the receiver, the transmitter, the random access memory, and the read-only memory through the bus. When the controller needs to run, a basic input/output system built into a read-only memory or a bootloader in an embedded system is used to boot the system to start, and boot the controller to enter a normal running state. After the controller enters the normal running state, an application program and an operating system are run in the random access memory, to enable the processor to implement functions of the main control board in the fourth aspect.

According to a sixth aspect, a computer storage medium is provided. The computer storage medium is configured to store a program, code, or instructions used by the foregoing second network device. When executing the program, the code, or the instructions, a processor or a hardware device can complete functions or steps of the second network device in the first aspect.

According to a seventh aspect, a management device is provided. The management device has a function of implementing a device management action in the foregoing method. The function may be implemented based on hardware, or may be implemented based on hardware executing corresponding software. The hardware or the software includes one or more modules corresponding to the foregoing function.

In a possible design, a structure of the management device includes a processor and an interface. The processor is configured to support the management device in implementing corresponding functions in the foregoing methods. The interface is configured to: support communication between the management device and each of the first network device and the second network device, send information or instructions in the foregoing methods to the first network device and the second network device, or receive information or instructions in the foregoing methods that are sent by the first network device and the second network device. The management device may further include a memory. The memory is configured to be coupled to the processor, and store program instructions and data that are necessary for the management device.

In another possible design, the management device includes a processor, a transmitter, a receiver, a random access memory, a read-only memory, and a bus. The processor is coupled to the transmitter, the receiver, the random access memory, and the read-only memory through the bus. When the management device needs to run, a basic input/output system built into a read-only memory or a bootloader in an embedded system is used to boot the system to start, and boot the management device to enter a normal running state. After the management device enters the normal running state, an application program and an operating system are run in the random access memory, to enable the processor to perform the method in any one of the second aspect or the possible implementations of the second aspect.

According to an eighth aspect, a management device is provided. The management device includes a main control board and an interface board, and may further include a switching board. The management device is configured to perform the method in any one of the second aspect or the possible implementations of the second aspect. Specifically, the management device includes modules configured to perform the method in any one of the second aspect or the possible implementations of the second aspect.

According to a ninth aspect, a management device is provided. The management device includes a controller and a second forwarding sub-device. The second forwarding sub-device includes an interface board, and may further include a switching board. The second forwarding sub-device is configured to perform a function of the interface board in the eighth aspect, and may further perform a function of the switching board in the eighth aspect. The controller includes a receiver, a processor, a transmitter, a random access memory, a read-only memory, and a bus. The processor is coupled to the receiver, the transmitter, the random access memory, and the read-only memory through the bus. When the controller needs to run, a basic input/output system built into a read-only memory or a bootloader in an embedded system is used to boot the system to start, and boot the controller to enter a normal running state. After the controller enters the normal running state, an application program and an operating system are run in the random access memory, to enable the processor to implement functions of the main control board in the eighth aspect.

According to a tenth aspect, a computer storage medium is provided. The computer storage medium is configured to store a program, code, or instructions used by the foregoing management device. When executing the program, the code, or the instructions, a processor or a hardware device can complete the functions or steps of the management device in the second aspect.

According to an eleventh aspect, a network system is provided. The network system includes a second network device and a management device. The second network device is the second network device in the third aspect, the fourth aspect, or the fifth aspect, and the management device is the management device in the seventh aspect, the eighth aspect, or the ninth aspect.

In the foregoing solutions, slice information can be advertised between the LLDP neighboring devices, and the LLDP neighboring devices can report the slice information to the management device, to help the management device obtain the slice information of the managed device in a timely manner and determine topology information of the network slices.

### BRIEF DESCRIPTION OF DRAWINGS

FIG. 1 is a schematic structural diagram of a communications network according to an embodiment of this application;
FIG. 2 is a schematic structural diagram of another communications network according to an embodiment of this application;
FIG. 3 is a schematic structural diagram of still another communications network according to an embodiment of this application;
FIG. 4A and FIG. 4B are a flowchart of a network topology discovery method according to an embodiment of this application;
FIG. 5 shows a format of an LLDP packet according to an embodiment of this application;
FIG. 6 shows a format of an LLDPDU according to an embodiment of this application;
FIG. 7 shows a format of another LLDPDU according to an embodiment of this application;
FIG. 8 is a schematic structural diagram of a second network device according to an embodiment of this application;
FIG. 9 is a schematic structural diagram of hardware of a second network device according to an embodiment of this application;
FIG. 10 is a schematic structural diagram of hardware of another second network device according to an embodiment of this application;
FIG. 11 is a schematic structural diagram of a management device according to an embodiment of this application;
FIG. 12 is a schematic structural diagram of hardware of a management device according to an embodiment of this application; and
FIG. 13 is a schematic structural diagram of hardware of another management device according to an embodiment of this application.

### DESCRIPTION OF EMBODIMENTS

The following describes the technical solutions of this application in detail by using specific embodiments.

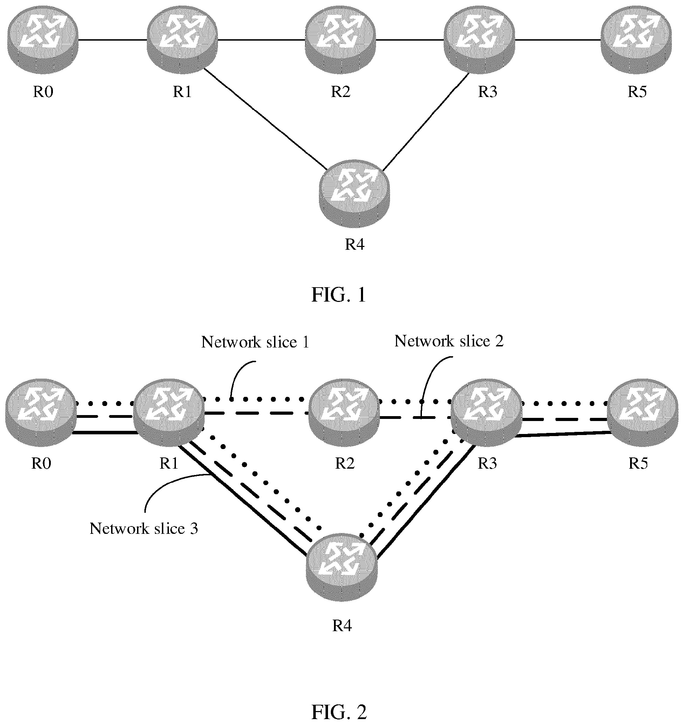

FIG. 1 is a schematic structural diagram of a communications network according to an embodiment of this application. The communications network includes a plurality of network devices. The communications network may be, for example, an internet protocol (Internet Protocol, IP) network. For example, as shown in FIG. 1, the communications network includes a network device R0, a network device R1, a network device R2, a network device R3, a network device R4, and a network device R5. The R0, the R1, the R2, the R3, and the R5 are sequentially connected through communications links, the R1 is further connected to the R4 through a communications link, and the R3 is further connected to the R4 through a communications link. In a possible implementation, communications links between the R0, the R1, the R2, the R3, the R4, and the R5 are physical communications links. The physical communications link may be a cable, an optical fiber, or a wireless link. Ports that connect the R0, the R1, the R2, the R3, the R4, and the R5 to the communications links may be physical ports. In a possible implementation, communications links between the R0, the R1, the R2, the R3, the R4, and the R5 are direct links. The direct link means that two devices (for example, the R0 and the R1) are directly connected through a link, and the link between the two devices does not include another forwarding device or processing device but may include a transparent transmission device. The communications network shown in FIG. 1 further includes a management device (which is not shown in FIG. 1). The management device separately communicates with the R0, the R1, the R2, the R3, the R4, and the R5. The management device is responsible for managing the R0, the R1, the R2, the R3, the R4, and the R5. Therefore, the R0, the R1, the R2, the R3, the R4, and the R5 may be considered as managed devices. LLDP can be run on the R0, the R1, the R2, the R3, the R4, and the R5. The R0, the R1, the R2, the R3, the R4, and R5 send LLDP packets to respective neighboring network devices. For example, the R1 may send an LLDP packet to the R2, and the R2 may also send an LLDP packet to the R1. In this way, the R0, the R1, the R2, the R3, the R4, and the R5 can learn of status information of their neighboring network devices based on the LLDP. For example, the R1 includes a local management information base (management information base, MIB) and a remote MIB. The local MIB of the R1 is used to store status information of a local network device (for example, the R1), and the remote MIB of the R1 is used to store status information of a neighboring network device (for example, the R2). When the status information of the local network device changes, the local network device extracts status information from the local MIB, generates an LLDP packet, and advertises the LLDP packet to the neighboring network device. When the status information of the local network device does not change, the local network device periodically extracts the status information from the local MIB, generates an LLDP packet, and advertises the LLDP packet to the neighboring network device. In an implementation of this application, "neighboring network device" may be referred to as an LLDP neighbor. For example, the R1 is an LLDP neighbor of the R0, and the R0 is also an LLDP neighbor of the R1. The managed devices (the R0, the R1, the R2, the R3, the R4, and the R5) each may send a notification message to the management device. The notification message includes status information extracted from a local MIB of the managed device and status information extracted from a remote MIB of the managed device. The notification message may be a simple network management protocol (Simple Network Management Protocol, SNMP) message. In a possible implementation, the managed device may include, in one notification message, the status information extracted from the local MIB of the managed device and the status information extracted from the remote MIB of the managed device. In another possible implementation, the managed device may include, in two notification messages, the status information extracted from the local MIB of the managed device and the status information extracted from the remote MIB of the managed device. The two notification messages are associated with each other. The management device receives notification messages reported by all managed devices within a management scope, so that the management device obtains status information in a local MIB of each managed device and status information in a remote MIB of each managed device. The management device determines a topology of the communications network based on the status information, that is, the management device obtains topology information of the communications network based on the status information. For example, in FIG. 1, the topology information of the communications network includes identification information of the R0, the R1, the R2, the R3, the R4, and the R5 and connection relationships between the R0, the R1, the R2, the R3, the R4, and the R5. Specifically, the connection relationship includes: information about a communications link between the R0 and the R1, information about a communications link between the R1 and the R2, information about a communications link between the R2 and the R3, information about a communications link between the R3 and an R6, information about a communications link between the R1 and the R4, and information about a communications link between the R3 and the R4. It should be understood that, in the implementations of this application, "status information" shall not be construed as information describing a status in a narrow sense. The "status information" may be understood as link layer information, and may include device information, port information, configuration information, system description information, and/or the like. In a possible implementation, the "status information" in the implementations of this application may include information that may be included in an LLDP packet defined in IEEE802.1AB, and the "status information" in the implementations of this application further includes slice information (for example, first slice information and second slice information described in this application).

FIG. 2 is a schematic structural diagram of another communications network according to an embodiment of this application. A physical structure of the communications network shown in FIG. 2 is the same as that of the communications network shown in FIG. 1. That is, a physical topology of the communications network shown in FIG. 2 is the same as that of the communications network shown in FIG. 1. In FIG. 2, an R0, an R1, an R2, an R3, and an R5 are sequentially connected through communications links, the R1 is further connected to the R4 through a communications link, and the R3 is further connected to the R4 through a communications link. A difference between the communications network shown in FIG. 2 and the communications network shown in FIG. 1 lies in that the communications network shown in FIG. 2 includes a plurality of network slices. In FIG. 2, the communications network includes a network slice 1 (which is denoted by dotted lines in FIG. 2), a network slice 2 (which is denoted by dashed lines in FIG. 2), and a network slice 3 (which is denoted by solid lines in FIG. 2). The network slice 1 includes the R0, the R1, the R2, the R3, the R4, R5, and communications links between the R0, the R1, the R2, the R3, the R4, and the R5. The network slice 2 includes the R0, the R1, the R2, the R3, the R4, R5, and communications links between the R0, the R1, the R2, the R3, the R4, and the R5. The network slice 3 includes the R0, R1, R3, R4, R5, and communications links between the R0, the R1, the R3, the R4, and the R5. In this case, a port on a network device may belong to different slices. For example, a first port of the R0 is connected to a second port of the R1 through a communications link. The first port belongs to the network slice 1, the network slice 2, and the network slice 3. Different network slices can be distinguished between each other by using slice identifiers (slice identifier, slice ID). For example, a slice ID-1 identifies the network slice 1, a slice ID-2 identifies the network slice 2, and a slice ID-3 identifies the network slice 3. As shown in FIG. 2, network devices and connection relationships included in the network slice 1 are the same as those included in the network slice 2. However, because the slice ID-1 is different from the slice ID-2, the network slice 1 and the network slice 2 are identified as different network slices.

Similar to FIG. 1, the communications network shown in FIG. 2 further includes a management device (which is not shown in FIG. 2). The management device separately communicates with the R0, the R1, the R2, the R3, the R4, and the R5. LLDP can be run on the R0, the R1, the R2, the R3, the R4, and the R5. The R0, the R1, the R2, the R3, the R4, and R5 send LLDP packets to respective neighboring network devices. In this way, the R0, the R1, the R2, the R3, the R4, and the R5 can learn of status information of their neighboring network devices based on the LLDP. The R0, the R1, the R2, the R3, the R4, and R5 each can send a notification message to the management device, so that the management device obtains status information in a local MIB of each managed device (the R0, the R1, the R2, the R3, the R4, and the R5) and status information in a remote MIB of each managed device. The management device determines topology information of the communications network based on the status information. Because the physical structure of the communications network shown in FIG. 2 is the same as that of the communications network shown in FIG. 1, the topology information obtained by the management device in FIG. 2 is the same as that obtained by the management device in FIG. 1. Therefore, based on an existing LLDP implementation, after collecting status information of each managed device, the management device cannot determine slice information in the network based on the status information. Consequently, the management device cannot determine the topology information of the network slice.

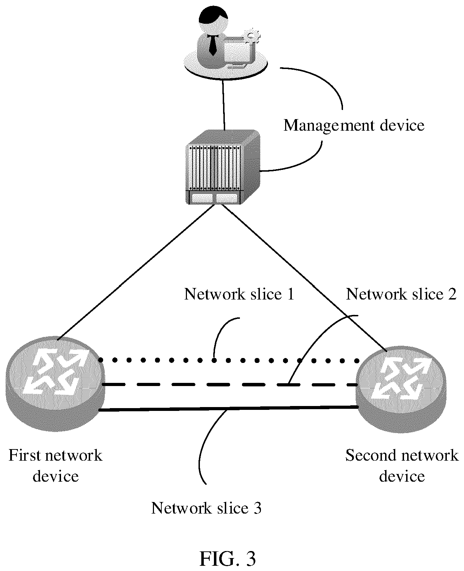

To resolve foregoing problem, this application provides a corresponding solution. FIG. 3 is a schematic structural diagram of still another communications network according to an embodiment of this application. As shown in FIG. 3, the communications network includes a first network device, a second network device, and a management device. A first port of the first network device is connected to a second port of the second network device through a communications link. The first network device and the second network device separately communicate with the management device. The communications network shown in FIG. 3 may be considered as a part of the communications network shown in FIG. 2. For example, the first network device may be the R0 in FIG. 2, and the second network device may be the R1 in FIG. 2. The management device may include a control device and a client device. The client device may provide a man-machine interaction interface for a network administrator, and the client device manages the first network device and the second network device by using the control device. In a possible implementation, the management device may be a network management system (network management system, NMS). In another possible implementation, the management device may include only a control device.

Similar to FIG. 2, the communications network in FIG. 3 includes a plurality of network slices. In FIG. 3, a communications network includes a network slice 1 (which is denoted by dotted lines in FIG. 3), a network slice 2 (which is denoted by dashed lines in FIG. 3), and a network slice 3 (which is denoted by solid lines in FIG. 3). A slice ID-1 identifies the network slice 1, a slice ID-2 identifies the network slice 2, and a slice ID-3 identifies the network slice 3.

Based on the foregoing description, the first network device and the second network device can advertise an LLDP packet to each other, to advertise their own status information to a neighboring network device. For example, the first network device sends an LLDP packet to the second network device. The LLDP packet includes slice information, and the slice information is used to indicate a network slice to which the first port of the first network device belongs, for example, a network slice 1. The first port is connected to the second port of the second network device through a communications link of the network slice 1. In a possible implementation, the slice information includes a slice identifier (the slice ID-1) of the network slice 1. The second network device receives the LLDP packet. In this way, the second network device can obtain status information of the first network device, and the status information includes the slice information. The second network device generates a notification message based on the LLDP packet. The notification message includes the slice information of the first network device. The notification message may further include slice information of the second network device. Then, the second network device sends the notification message to the management device. After receiving the notification message, the management device obtains the slice information of the first network device and the slice information of the second network device. Similarly, the second network device may also send an LLDP packet to the first network device. The first network device may also send a notification message to the management device. In this case, the management device can obtain, based on the LLDP, the status information reported by the first network device and the status information reported by the second network device. Compared with that in the implementation of FIG. 1, information that is obtained by the management device and that is reported by the first network device and the second network device includes the slice information of the first network device and the slice information of the second network device. Therefore, the management device can determine topology information of the network slice (the network slice 1) based on the slice information of the first network device and the slice information of the second network device.

In the implementation of FIG. 2 or FIG. 3, a network device may obtain slice information of a neighboring network device based on an extended LLDP packet. In addition, the network device includes the slice information in a notification message reported to the management device. The management device can obtain slice information of a managed device based on the notification message. In addition, the management device can determine topology information of a network slice of the communications network based on the obtained slice information.

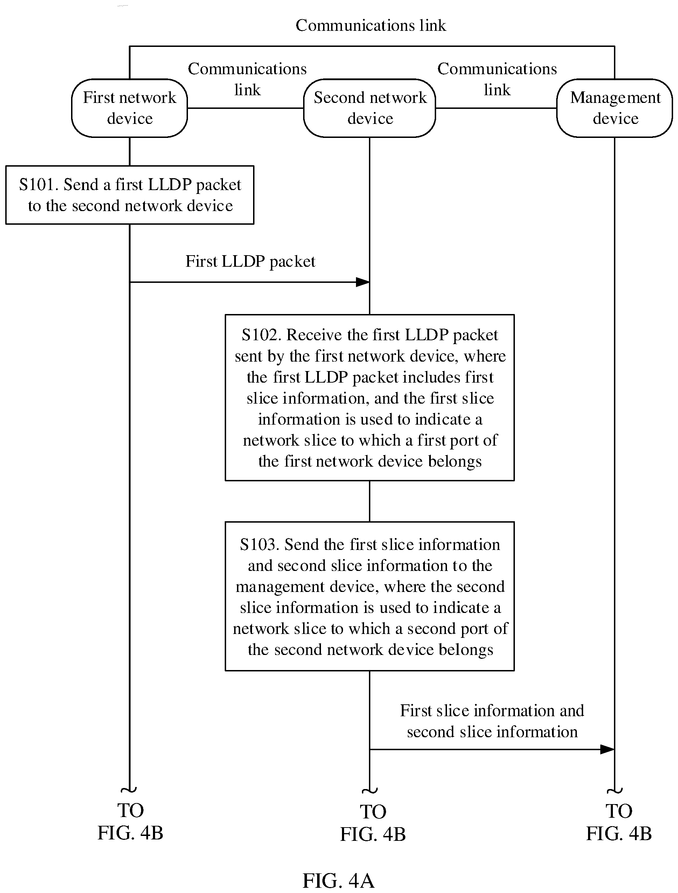

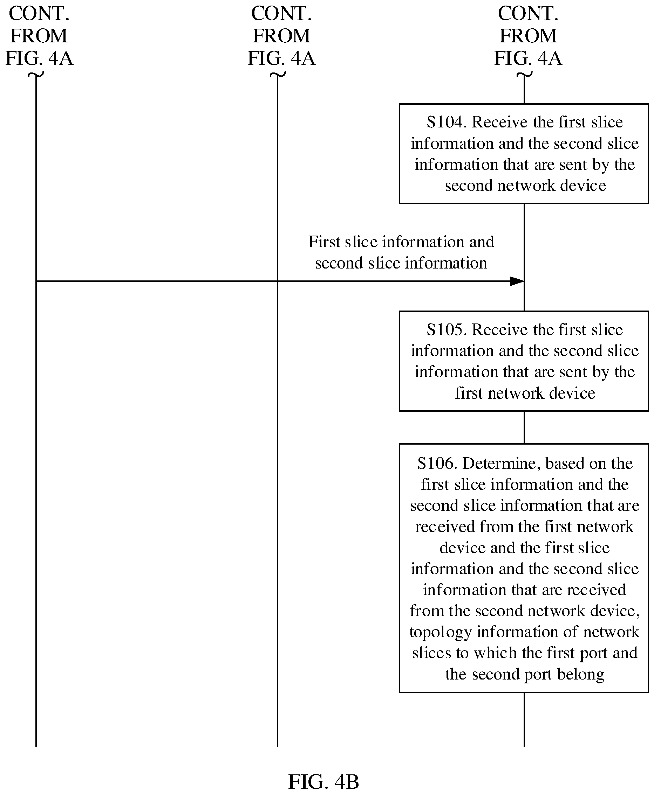

FIG. 4A and FIG. 4B are a flowchart of a network topology discovery method according to an embodiment of this application. The method shown in FIG. 4A and FIG. 4B may be applied to the network structure shown in FIG. 2 or FIG. 3. In an implementation of this application, for ease of description, a "first network device" and a "second network device" are used for description. It should be understood that the "first network device" is, for example, the router R0 in FIG. 2, and the "second network device" is, for example, the router R1 in FIG. 2. Specifically, the method includes the following steps.

S101: A first network device sends a first LLDP packet to a second network device.

S102: The second network device receives the first LLDP packet sent by the first network device, where the first LLDP packet includes first slice information, and the first slice information is used to indicate a network slice to which a first port of the first network device belongs.

Refer to FIG. 3. The first network device is a neighboring network device of the second network device, and the second network device is also a neighboring network device of the first network device. LLDP is run on both the first network device and the second network device. In other words, the first network device is an LLDP neighbor of the second network device, and the second network device is also an LLDP neighbor of the first network device. The first network device and the second network device can send an LLDP packet to each other, to advertise respective status information to each other. In this implementation, an example in which the first network device sends the first LLDP packet to the second network device is used for description.

It can be learned from FIG. 3 that three network slices are included between the first network device and the second network device: a network slice 1, a network slice 2, and a network slice 3. A slice identifier of the network slice 1 is a slice ID-1, a slice identifier of the network slice 2 is a slice ID-2, and a slice identifier of the network slice 3 is a slice ID-3. The first network device generates the first LLDP packet based on status information in a local MIB, and sends the first LLDP packet to the second network device. The first LLDP packet includes the first slice information, and the first slice information is used to indicate the network slice to which the first port of the first network device belongs. In other words, it may be determined, by analyzing the first slice information, that the first port is a part of the network slice. The first network device may receive or send, through the first port, a packet on a path determined based on topology information of the network slice.

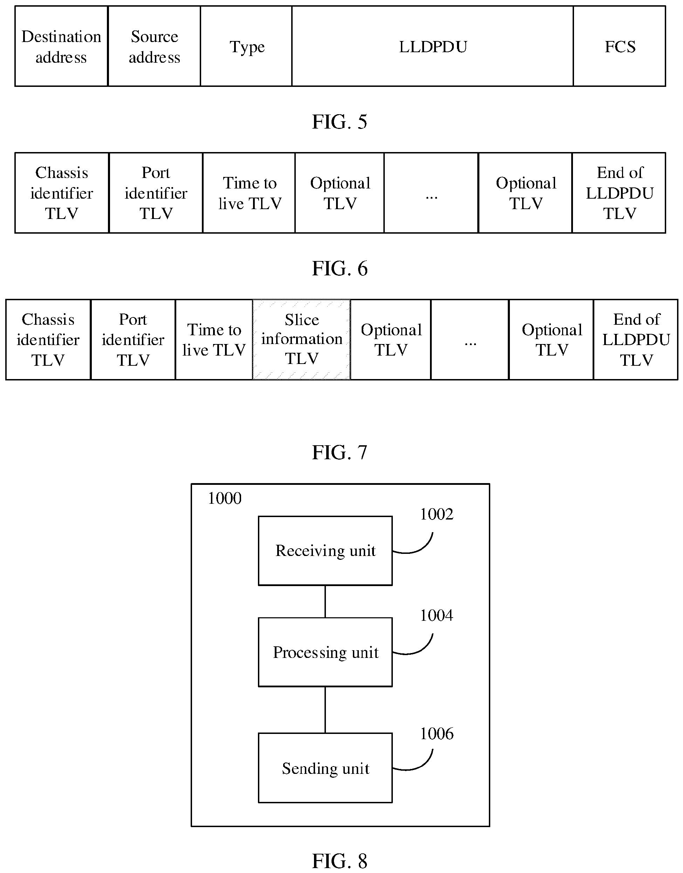

The following describes an implementation in which the first LLDP packet carries the first slice information. FIG. 5 shows a format of the first LLDP packet. The first LLDP packet includes a destination address (Destination address), a source address (Source address), a type (Type), a link layer discovery protocol packet data unit (Link Layer Discovery Protocol data unit, LLDPDU), and a frame check sequence (frame check sequence, FCS). The destination address is a multicast address, and has a value of 01-80-C2-00-00-0E. The source address is a media access control (Media Access Control, MAC) address of a sending node or a sending port. The type is used to indicate an LLDP encapsulation type. The LLDPDU is an entity for exchanging LLDP information. The FCS is used for frame check.

FIG. 6 shows a format of the LLDPDU in the first LLDP packet. The LLDPDU includes a plurality of type-length-values (type-length-value, TLV). Specifically, the LLDPDU includes a chassis identifier (Chassis ID) TLV, a port identifier (Port ID) TLV, a time to live (Time to live) TLV, an optional (Optional) TLV, and an end of LLDPDU (End of LLDPDU) TLV. The chassis identifier TLV identifies a bridge MAC address of a device that sends the LLDPDU. The port identifier TLV identifies a port of an LLDPDU transmit end. The time to live TLV identifies how long device information will be valid on a neighboring node. The three types of TLVs are basic TLVs in the LLDPDU. The LLDPDU may include a plurality of optional TLVs. In an implementation of this application, at least one optional TLV may be used to carry the first slice information. As shown in FIG. 7, the LLDPDU includes slice information TLV, and the slice information TLV is used to carry the first slice information. The slice information TLV includes a type field, a length field, and a value field. The type field indicates that the slice information TLV is used to carry the slice information. The length field is used to indicate a length of content of the slice information TLV. The value field is used to carry content of the slice information.

In a possible implementation, the first slice information includes a first slice identifier, and the first slice identifier is used to identify a network slice. For example, if a value of the first slice identifier is the slice ID-1, the first slice identifier is used to indicate the network slice 1. According to the foregoing description, the LLDPDU in the first LLDP packet already includes the chassis identifier TLV and the port identifier TLV. The chassis identifier TLV is used to carry a chassis identifier, and the chassis identifier is used to identify the first network device. Therefore, the chassis identifier may be considered as a device identifier of the first network device. The port identifier TLV is used to carry a port identifier, and the port identifier is used to identify the first port. After receiving the first LLDP packet, the second network device can determine, based on the chassis identifier and the port identifier in the first LLDP packet, that the first slice identifier indicates the network slice (for example, the network slice 1) to which the first port of the first network device belongs. In this implementation, the first slice information does not need to include a device identifier or a port identifier. Instead, the device identifier and the port identifier are obtained by reading values in the chassis identifier TLV and the port identifier TLV in the LLDPDU in the first LLDP.

Based on the foregoing implementation, a variant implementation is as follows: Content carried in the slice information TLV included in the LLDPDU is the first slice identifier rather than the first slice information. In this case, the first slice information is considered as being in a larger range. In other words, a value of the slice information TLV included in the LLDPDU, a value of the chassis identifier TLV included in the LLDPDU, and a value of the port identifier TLV included in the LLDPDU may be included in the first slice information.

In still another possible implementation, the first slice information includes a first slice identifier. A value of the first slice identifier is divided into three parts by length. In other words, the value of the first slice identifier is divided into three parts in sequence from most significant bits of the value of the first slice identifier to least significant bits of the value of the first slice identifier. The first part is used to identify the first network device, the second part is used to identify the first port, and the third part is used to carry a value of a slice identifier (for example, the slice ID-1). In this way, the first slice identifier can indicate values of the device identifier, the port identifier, and the slice identifier. After receiving the first LLDP packet, the second network device can determine, based on the first slice identifier, that the first slice identifier indicates the network slice (for example, the network slice 1) to which the first port of the first network device belongs. The second network device may not need to obtain corresponding data from the chassis identifier TLV and the port identifier TLV in the LLDPDU.

In the foregoing implementation, the first slice information further includes a first port bandwidth, and the first port bandwidth is used to indicate an available bandwidth of the first port. The first port bandwidth may be carried in an optional TLV in the LLDPDU. Alternatively, a value of the first slice identifier may be divided into four parts by length according to the foregoing method. In addition to the content carried in the foregoing three parts, the fourth part is used to identify the first port bandwidth.

The foregoing implementation is described by using an example in which the first network device sends the first LLDP packet to the second network device. Similarly, the second network device may also send an LLDP packet, for example, a second LLDP packet, to the first network device. The second LLDP packet includes second slice information, and the second slice information is used to indicate a network slice (for example, the network slice 1) to which a second port of the second network device belongs. For specific implementations of the second LLDP packet and the second slice information, refer to the specific implementations of the first LLDP packet and the first slice information. Details are not described herein again.

After generating the first LLDP packet, the first network device sends the first LLDP packet to the second network device. Specifically, the first network device can send the first LLDP packet to the second network device through the first port. The second network device receives the first LLDP packet. Specifically, the second network device can receive the first LLDP packet through the second port of the second network device.

S103: The second network device sends the first slice information and the second slice information to a management device, where the second slice information is used to indicate the network slice to which the second port of the second network device belongs.

After receiving the first LLDP packet, the second network device parses the first LLDP packet. The second network device obtains status information of the first network device included in the first LLDP packet. Specifically, the second network device obtains the plurality of TLVs included in the LLDPDU in the first LLDP packet, to obtain the status information of the first network device. In an implementation of this application, the status information of the first network device includes the first slice information. For an implementation of the first slice information, refer to the foregoing implementation. The status information of the first network device may further include one or more types of the following information related to the first network device: a device identifier, an interface identifier, a system name, a system description, an interface description, a device capability, and a network management address. The second network device can store the obtained status information of the first network device in a remote MIB of the second network device. Similarly, if a neighboring network device of the second network device further includes a third network device, and the remote MIB of the second network device is further used to store status information of the third network device.

The second network device further includes a local MIB. Similarly, the local MIB of the second network device is used to store status information of the second network device. The status information of the second network device includes the second slice information mentioned above, and the second slice information is used to indicate the network slice to which the second port of the second network device belongs. The status information of the second network device may further include one or more types of the following information related to the second network device: a device identifier, an interface identifier, a system name, a system description, an interface description, a device capability, and a network management address.

In the foregoing implementation, the first port of the first network device exchanges an LLDP packet with the second port of the second network device. Therefore, the first network device and the second network device are LLDP neighbors. In other words, the first port of the first network device and the second port of the second network device are LLDP neighbors. When there is no configuration error, the first port and the second port belong to a same network slice. Accordingly, the first slice identifier in the first slice information is the same as a second slice identifier in the second slice information.

Similarly, the first network device includes the local MIB and a remote MIB. The local MIB of the first network device is used to store the status information of the first network device. The remote MIB of the first network device is used to store the status information of the second network device.

In the foregoing implementation, the second network device can determine the status information of the first network device based on the first LLDP packet.

When the local MIB of the first network device changes, the first network device can determine that the status information of the first network device changes. Then, the first network device extracts status information from a current local MIB of the first network device, and sends a third LLDP packet to the second network device. The third LLDP packet includes the status information of the first network device.

When the local MIB of the first network device does not change, the first network device extracts the status information of the first network device based on a specific period, and sends a third LLDP packet to the second network device. The third LLDP packet includes the status information of the first network device.

In the foregoing implementation, the third LLDP packet includes third slice information, and the third slice information is used to indicate a network slice (for example, the network slice 1) to which the first port of the first network device belongs at a second moment. Correspondingly, the first slice information is used to indicate a network slice to which the first port of the first network device belongs at a first moment, and the first moment is different from the second moment. If a change of the local MIB of the first network device causes a change of topology information of a network slice (for example, the network slice 1) related to the first network device, the third slice information is different from the first slice information mentioned above. If a change of the local MIB of the first network device does not cause a change of topology information of a network slice (for example, the network slice 1) related to the first network device, or the local MIB of the first network device does not change, the third slice information is the same as the first slice information mentioned above. After receiving the third LLDP packet, the second network device can update the remote MIB of the second network device based on the status information of the first network device in the third LLDP packet. In this way, if topology information related to a network device in a network slice changes, the network device can advertise, through an LLDP packet, a neighboring network device to update a corresponding remote MIB, so that the network device can learn of a change of the topology information of the network slice of the neighboring network device of the network device in a timely manner.

Based on the foregoing implementation, in a possible implementation, after the second network device receives the LLDP packet sent by the first network device, the second network device compares the status information of the first network device in the LLDP packet with status information of the first network device stored in the remote MIB. When the second network device determines that the status information of the first network device in the LLDP packet is different from the status information of the first network device stored in the remote MIB, the second network device updates the remote MIB based on the LLDP packet. On the contrary, if the status information of the first network device in the LLDP packet is the same as the status information of the first network device stored in the remote MIB, the second network device does not update the remote MIB.

The second network device can obtain the first slice information from the remote MIB and obtain the second slice information from the local MIB. Then, the second network device sends the first slice information and the second slice information to the management device. The second slice information is used to indicate the network slice to which the second port of the second network device belongs. In a possible implementation, the second network device obtains the status information of the first network device from the remote MIB. The status information of the first network device includes the first slice information. The second network device obtains the status information of the second network device from the local MIB. The status information of the second network device includes the second slice information. Then, the second network device sends the status information of the first network device and the status information of the second network device to the management device.

The second network device can generate a first notification message. The first notification message includes the first slice information and the second slice information. In a possible implementation, the first notification message includes the status information of the first network device and the status information of the second network device, the status information of the first network device includes the first slice information, and the status information of the second network device includes the second slice information. In a possible implementation, the first notification message includes two notification messages: a notification message 1 and a notification message 2. The notification message 1 includes the first slice information or the status information of the first network device, and the notification message 2 includes the second slice information or the status information of the second network device. For example, the second network device extracts the status information of the second network device from the local MIB, and the second network device extracts the status information of the first network device from the remote MIB. Then, the second network device generates the first notification message, and then the second network device sends the first notification message to the management device. In a similar implementation, the first network device sends the first slice information and the second slice information to the management device; or the second network device sends the status information of the first network device and the status information of the second network device to the management device. The first network device can generate a third notification message. An implementation of the third notification message is similar to that of the first notification message, and details are not described herein again.

S104: The management device receives the first slice information and the second slice information that are sent by the second network device.

S105: The management device receives the first slice information and the second slice information that are sent by the first network device.

According to the foregoing implementation, the second network device can generate the first notification message. The first notification message includes the first slice information and the second slice information. As shown in FIG. 3, after generating the first notification message, the second network device sends the first notification message to the management device. In an implementation of this application, the first notification message may also be referred to as an LLDP alarm message. In a possible implementation, the second network device may send the first notification message to the management device based on a network management protocol. For example, the first notification message is a network configuration protocol (NETCONF) message, a simple network management protocol (Simple Network Management Protocol, SNMP) message, or a RESTful message. The SNMP message may be specifically an SNMP trap (SNMP trap) message. In still another possible implementation, the first notification message may be a border gateway protocol-link state (Border Gateway Protocol-link state, BGP-LS) message. In still another possible implementation, the second network device sends the first notification message to the management device based on a telemetry (Telemetry) technology. For example, the first notification message is an in-situ flow information telemetry (In-situ Flow Information Telemetry, iFIT) packet.

In a possible implementation, the second network device proactively reports a notification message to the management device. For example, after receiving, for the first time, an LLDP packet sent by a neighboring network device, the second network device proactively sends a notification message to the management device. For another example, each time the second network device receives an LLDP packet sent by a neighboring network device, the second network device proactively sends a notification message to the management device. For another example, after detecting that the local MIB and/or the remote MIB change/changes, the second network device extracts status information from the local MIB and the remote MIB, and proactively sends, through a notification message, the status information to the management device.

Further, after detecting that the local MIB and/or the remote MIB change/changes, the second network device may send the status information in the local MIB and the remote MIB to the management device. For example, the second network device sends slice information in the local MIB and slice information in the remote MIB to the management device. Alternatively, after detecting that the local MIB and/or the remote MIB change/changes, the second network device may send changed status information to the management device. For example, when the second network device detects that the remote MIB changes but the local MIB does not change, the second network device sends slice information in the remote MIB to the management device.

In another possible implementation, the second network device sends a notification message based on a request message of the management device. For example, the management device sends a request message to a network device managed by the management device. The second network device serves as the managed device and can receive the request message. The second network device sends a notification message to the management device based on the request message. The request message is used by the management device to request status information from the network device managed by the management device. For example, the management device sends the request message to the network device, to obtain device information or port information of the network device. In an implementation of this application, the request message is further used by the management device to request slice information from the network device managed by the management device. In a similar implementation, the request message may be a NETCONF message, an SNMP message, or a BGP-LS message. Alternatively, the request message is implemented based on a telemetry technology.

The foregoing implementation of proactive reporting and the implementation based on reporting of a request message may be used together. For example, a notification message sent by the second network device to the management device for the first time is sent based on a request message of the management device. In a subsequent running process of a communications network, the second network device periodically and proactively sends a notification message to the management device. Alternatively, after detecting that the local MIB and/or the remote MIB change/changes, the second network device proactively sends a notification message to the management device.

Similarly, the first network device can send a third notification message to the management device. An implementation of the third notification message is similar to that of the first notification message, and details are not described herein again.

S106: The management device determines, based on the first slice information and the second slice information that are received from the first network device and the first slice information and the second slice information that are received from the second network device, topology information of network slices to which the first port and the second port belong.

The management device parses the first notification message after receiving the first notification message sent by the second network device. In this case, the management device obtains the first slice information and the second slice information from the first notification message. Similarly, the management device can further receive the third notification message sent by the first network device, and parse the third notification message. In this case, the management device obtains the first slice information and the second slice information from the third notification message. The management device can determine, based on the first slice information and the second slice information that are received from the first network device and the first slice information and the second slice information that are received from the second network device, that the first port of the first network device and the second port of the second network device are LLDP neighbors. In this case, the management device can determine the topology information of the network slice (for example, the network slice 1) to which the first port and the second port belong. Therefore, the first slice information and the second slice information are used to generate the topology information of the network slice (for example, the network slice 1). In an implementation of this application, managed devices in a communications network send an LLDP packet to each other, to advertise status information to each other. In addition, all of the managed devices in the communications network can send a notification message to the management device. As described in the foregoing implementations, both the first network device and the second network device can send a notification message to the management device. In this way, the management device can obtain duplicate slice information. The management device performs verification and deduplication based on specific duplicate information. This implementation helps the management device more accurately learn of the topology information of the network slice, to generate more accurate topology information of the network slice. The first slice information is used as an example. For the notification message sent by the second network device, the first slice information is obtained from the remote MIB of the second network device. For the notification message sent by the first network device, first slice information is obtained from the local MIB of the first network device. The management device can compare content of the two pieces of first slice information, to determine whether the slice information reported by the first network device and the second network device is correct and further determine whether the topology information is accurate. In this implementation of this application, the topology information of the network slice to which the first port and the second port belong indicates that the first port of the first network device is directly connected to the second port of the second network device, that is, indicates that there is a direct link between the first port of the first network device and the second port of the second network device.

In a process of determining topology information of a network slice, the management device may use the slice identifier as index information, to distinguish between topology information of different network slices. For example, with reference to FIG. 3, the management device can determine, based on the first slice information, that the first slice information indicates that the slice identifier is the slice ID-1, the device identifier is an identifier of the first network device, and the port identifier is an identifier of the first port of the first network device. The first slice information is expressed as, for example, (slice ID-1, device-1, port-1). The management device can determine, based on the second slice information, that the second slice information indicates that the slice identifier is the slice ID-1, the device identifier is an identifier of the second network device, and the port identifier is an identifier of the second port of the second network device. The second slice information is expressed as, for example, (slice ID-1, device-2, port-2). In this case, the network device can determine, based on the first slice information and the second slice information, that the first port of the first network device and the second port of the second network device belong to the network slice 1. The topology information of the network slice 1 may include the first port of the first network device, the second port of the second network device, and a connection relationship between the first port and the second port. In addition, the management device may use the slice ID-1 as the slice identifier of the network slice 1, to distinguish the network slice 1 from other network slices.

Similarly, topology information of each network slice in FIG. 2 may be determined in the foregoing implementations. Specifically, the topology information of the network slice 1 in FIG. 2 includes: a port 1 of the R0, a port 1 of the R1, and a connection relationship between the port 1 of the R0 and the port 1 of the R1; a port 2 of the R1, a port 1 of an R2, and a connection relationship between the port 2 of the R1 and the port 1 of the R2; a port 2 of the R2, a port 1 of an R3, and a connection relationship between the port 2 of the R2 and the port 1 of the R3; a port 2 of the R3, a port 1 of an R5, and a connection relationship between the port 2 of the R3 and the port 1 of the R5; a port 3 of the R1, a port 1 of an R4, and a connection relationship between the port 3 of the R1 and the port 1 of the R4; and a port 2 of the R4, a port 3 of the R3, and a connection relationship between the port 2 of the R4 and the port 3 of the R3. The topology information of the network slice 1 further includes the slice ID-1 (slice identifier). The topology information of the network slice 2 in FIG. 2 includes: the port 1 of the R0, the port 1 of the R1, and the connection relationship between the port 1 of the R0 and the port 1 of the R1; the port 2 of the R1, the port 1 of the R2, and the connection relationship between the port 2 of the R1 and the port 1 of the R2; the port 2 of the R2, the port 1 of the R3, and the connection relationship between the port 2 of the R2 and the port 1 of the R3; the port 2 of the R3, the port 1 of the R5, and the connection relationship between the port 2 of the R3 and the port 1 of the R5; the port 3 of the R1, the port 1 of the R4, and the connection relationship between the port 3 of the R1 and the port 1 of the R4; and the port 2 of the R4, the port 3 of the R3, and the connection relationship between the port 2 of the R4 and the port 3 of the R3. The topology information of the network slice 2 further includes the slice ID-2. It can be learned that the node devices and the connection relationship in the network slice 2 are the same as the node devices and the connection relationship in the network slice 1. However, because the slice ID-1 is different from the slice ID-2, the network slice 1 and the network slice 2 belong to different network slices. The topology information of the network slice 3 in FIG. 2 includes: the port 1 of the R0, the port 1 of the R1, and the connection relationship between the port 1 of the R0 and the port 1 of the R1; the port 2 of the R3, the port 1 of the R5, and the connection relationship between the port 2 of the R3 and the port 1 of the R5; the port 3 of R1, the port 1 of the R4, and the connection relationship between the port 3 of the R1 and the port 1 of the R4; and the port 2 of the R4, the port 3 of the R3, and the connection relationship between the port 2 of the R4 and the port 3 of the R3. The topology information of the network slice 3 further includes the slice ID-3.

In an implementation of this application, the first port of the first network device and the second port of the second network device are a peer (peer) of each other, and may also be referred to as a neighboring network device or an LLDP neighbor. That is, the first port is an LLDP peer of the second port, and the second port is an LLDP peer of the first port. The first slice identifier corresponding to the first port is the same as the second slice identifier corresponding to the second port. If the first network device or the second network device determines that the first slice identifier is different from the second slice identifier, an alarm may be triggered. For example, the first slice information includes a first slice identifier, the first slice identifier is used to identify the network slice to which the first port belongs, the second slice information includes a second slice identifier, and the second slice identifier is used to identify the network slice to which the second port belongs. The second network device receives the first LLDP packet sent by the first network device, and the first network device receives the second LLDP packet sent by the second network device. The first port is a receive port of the second LLDP packet, and the second port is a receive port of the first LLDP packet. The second network device determines whether the first slice identifier is the same as the second slice identifier. The second network device generates second alarm information if the second network device determines that the first slice identifier is different from the second slice identifier. The second alarm information is used to indicate that the slice information of the first port does not match the slice information of the second port. The second network device may display the second alarm information on an interaction interface of the second network device, or the second network device sends a second alarm message to the management device. The second alarm message includes the second alarm information. Similarly, if the first network device determines that the first slice identifier is different from the second slice identifier, the first network device generates a first alarm information. The first alarm information is used to indicate that the slice information of the first port does not match the slice information of the second port. The first network device may display the first alarm information on an interaction interface of the first network device, or the first network device sends the first alarm message to the management device. The first alarm message includes the first alarm information. If the second network device determines that the first slice identifier is the same as the second slice identifier, the second network device stores the first slice information. Specifically, the second network device stores the first slice information in the remote MIB of the second network device. Similarly, if the first network device determines that the first slice identifier is the same as the second slice identifier, the first network device stores the second slice information. Specifically, the first network device stores the second slice information in the remote MIB of the first network device.

In the foregoing implementation, when the network includes a network slice, the managed device includes slice information in an LLDP packet when sending the LLDP packet to a neighboring network device, so that the management device can obtain the slice information of the managed device in the network, and the management device can determine topology information of the managed device based on the obtained slice information.

FIG. 8 is a schematic structural diagram of a second network device 1000 according to an embodiment of this application. The second network device 1000 shown in FIG. 8 can perform corresponding steps performed by the second network device in the methods in the foregoing embodiments. The second network device 1000 is deployed in a communications network, and the communications network further includes a first network device and a management device. As shown in FIG. 8, the second network device 1000 includes a receiving unit 1002 and a sending unit 1006.

The receiving unit 1002 is configured to receive a first LLDP packet sent by the first network device. The first LLDP packet includes first slice information, and the first slice information is used to indicate a network slice to which a first port of the first network device belongs.

The sending unit 1006 is configured to send the first slice information and second slice information to the management device. The second slice information is used to indicate a network slice to which a second port of the second network device 1000 belongs.

Optionally, the second network device further includes a processing unit 1004. The processing unit 1004 is configured to obtain the first slice information and the second slice information.

Optionally, before the sending unit 1006 sends the first slice information and the second slice information to the management device, the receiving unit 1002 is further configured to receive a request message sent by the management device, where the request message is used by the management device to request slice information from a network device managed by the management device.

Optionally, in the sending, by the sending unit 1006, the first slice information and the second slice information to the management device, the sending unit 1006 is specifically configured to send a first notification message to the management device. The first notification message includes the first slice information and the second slice information, and the first notification message is a NETCONF message.

Optionally, the receiving unit 1002 is further configured to receive a third LLDP packet sent by the first network device. The third LLDP packet includes third slice information, the third slice information is used to indicate a network slice to which the first port of the first network device belongs at a second moment, the first slice information is used to indicate a network slice to which the first port of the first network device belongs at a first moment, and the first moment is different from the second moment. The sending unit 1006 is further configured to send the third slice information to the management device.

Optionally, in the sending, by the sending unit 1006, the third slice information to the management device, the sending unit 1006 is specifically configured to send a second notification message to the management device. The second notification message includes the third slice information, and the second notification message is an SNMP trap message.

Optionally, the sending unit 1006 is further configured to send a second LLDP packet to the first network device. The second LLDP packet includes the second slice information.

Optionally, the first slice information includes a first slice identifier, the first slice identifier is used to identify the network slice to which the first port belongs, the second slice information includes a second slice identifier, the second slice identifier is used to identify the network slice to which the second port belongs, and the first slice identifier is the same as the second slice identifier.

Optionally, the first slice information further includes a first device identifier and a first port identifier, the first device identifier is used to indicate the first network device, the first port identifier is used to indicate the first port of the first network device, the second slice information further includes a second device identifier and a second port identifier, the second device identifier is used to indicate the second network device, and the second port identifier is used to indicate the second port of the second network device.

Optionally, the first slice information further includes a first port bandwidth, the first port bandwidth is used to indicate an available bandwidth of the first port, the second slice information further includes a second port bandwidth, and the second port bandwidth is used to indicate an available bandwidth of the second port.

Optionally, topology information of the network slice to which the first port and the second port belong includes the first slice identifier.

Optionally, the first slice information includes a first slice identifier, the first slice identifier is used to identify the network slice to which the first port belongs, the second slice information includes a second slice identifier, the second slice identifier is used to identify the network slice to which the second port belongs, the first port is a receive port of the second LLDP packet, and the second port is a receive port of the first LLDP packet. The processing unit 1004 is further configured to determine whether the first slice identifier is the same as the second slice identifier.

Optionally, the processing unit 1004 is further configured to generate alarm information in response to that the first slice identifier is different from the second slice identifier. The alarm information is used to indicate that slice information of the first port does not match slice information of the second port.

Optionally, the processing unit 1004 is further configured to store the first slice information in response to that the first slice identifier is the same as the second slice identifier.

The second network device 1000 shown in FIG. 8 can perform corresponding steps performed by the second network device in the methods in the foregoing embodiments. The second network device receives the first LLDP packet sent by the first network device, obtains the first slice information in the first LLDP packet and the locally stored second slice information, and then sends the first slice information and the second slice information to the management device, to help the management device determine the topology information of the network slice.

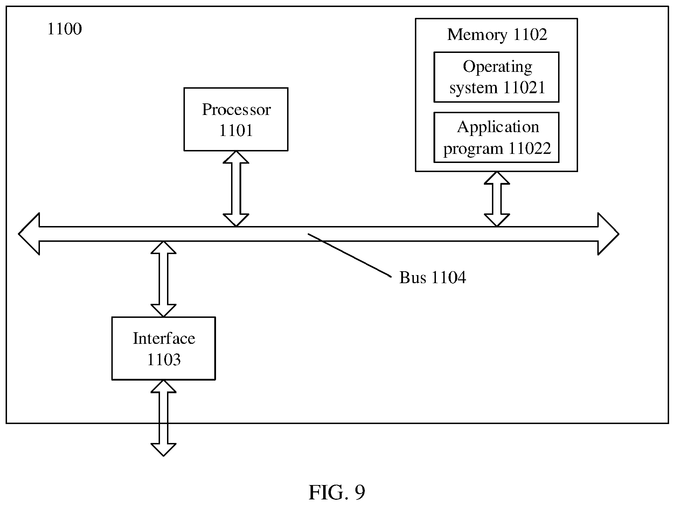

FIG. 9 is a schematic structural diagram of hardware of a second network device 1100 according to an embodiment of this application. The second network device 1100 shown in FIG. 9 can perform corresponding steps performed by the second network device in the methods in the foregoing embodiments.

As shown in FIG. 9, the second network device 1100 includes a processor 1101, a memory 1102, an interface 1103, and a bus 1104. The interface 1103 may be implemented in a wireless or wired manner. The processor 1101, the memory 1102, and the interface 1103 are connected through the bus 1104.

The interface 1103 may specifically include a transmitter and a receiver. The interface 1103 is configured for the second network device to receive information from and send information to the first network device in the foregoing embodiments, and is configured for the second network device to receive information from and send information to the management device in the foregoing embodiments. For example, the interface 1103 is configured to support receiving of a first LLDP packet sent by the first network device. In addition, the interface 1103 is configured to support sending of first slice information and second slice information to the management device. For example, the interface 1103 is configured to support the processes S102 and S103 in FIG. 4A. The processor 1101 is configured to perform processing performed by the second network device in the foregoing embodiments. For example, the processor 1101 is configured to: perform an action of obtaining the first slice information and the second slice information, and/or perform another process used for the technology described in this specification. The memory 1102 is configured to store a program, code, or instructions, for example, store an operating system 11021 and an application program 11022. When executing the program, the code, or the instructions, the processor or a hardware device can complete a processing process related to the second network device in the method embodiments. Optionally, the memory 1102 may include a read-only memory (Read-only Memory, ROM) and a random access memory (Random Access Memory, RAM). The ROM includes a basic input/output system (Basic Input/Output System, BIOS) or an embedded system, and the RAM includes an application program and an operating system. When the second network device 1100 needs to run, the BIOS built into the ROM or a bootloader in the embedded system is used to boot the system to start, and boot the second network device 1100 to enter a normal running state. After the second network device 1100 enters the normal running state, the application program and the operating system in the RAM are run, to complete processing procedures of the second network device in the method embodiments.

It may be understood that FIG. 9 shows only a simplified design of the second network device 1100. In actual application, the second network device may include any quantity of interfaces, processors, or memories.

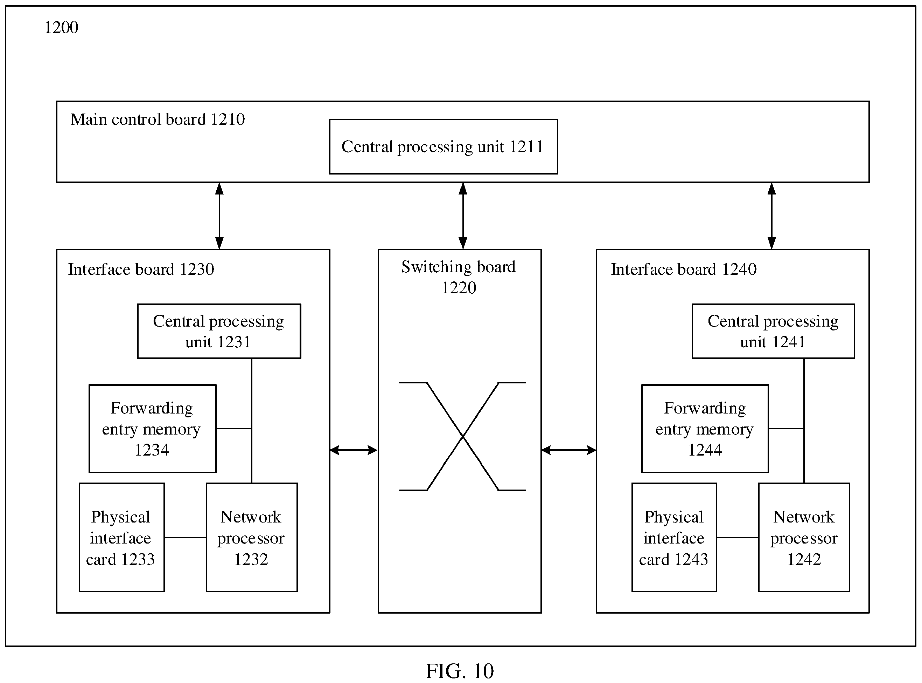

FIG. 10 is a schematic structural diagram of hardware of another second network device 1200 according to an embodiment of this application. The second network device 1200 shown in FIG. 10 can perform corresponding steps performed by the second network device in the method in the foregoing embodiments.

As shown in FIG. 10, the second network device 1200 includes a main control board 1210, an interface board 1230, a switching board 1220, and an interface board 1240. The main control board 1210, the interface board 1230, the interface board 1240, and the switching board 1220 are connected to a system backplane through a system bus for communication. The main control board 1210 is configured to complete functions such as system management, device maintenance, and protocol processing. The switching board 1220 is configured to exchange data between interface boards (where the interface board is also referred to as a line card or a service board). The interface board 1230 and the interface board 1240 are configured to provide various service interfaces (for example, a POS interface, a GE interface, and an ATM interface), and forward a data packet.

The interface board 1230 may include a central processing unit 1231, a forwarding entry memory 1234, a physical interface card 1233, and a network processor 1232. The central processing unit 1231 is configured to control and manage the interface board, and communicate with a central processing unit on the main control board. The forwarding entry memory 1234 is configured to store a forwarding entry. The physical interface card 1233 is configured to receive and send traffic. The network processor 1232 is configured to control, based on the forwarding entry, the physical interface card 1233 to receive and send the traffic.

Specifically, the physical interface card 1233 is configured to receive a first LLDP packet sent by the first network device. The physical interface card 1233 is further configured to send first slice information and second slice information to a management device.

After receiving the first LLDP packet, the physical interface card 1233 sends the first LLDP packet to the central processing unit 1231. The central processing unit 1231 determines, based on information in a packet header of the first LLDP packet, that the first LLDP packet needs to be processed by the central processing unit 1231. Accordingly, the central processing unit 1231 processes the first LLDP packet.

Optionally, after receiving the LLDP packet, the physical interface card 1233 sends the LLDP packet to the central processing unit 1231. The central processing unit 1231 determines, based on information in a packet header of the first LLDP packet, that the first LLDP packet needs to be processed by the central processing unit 1211. The central processing unit 1231 sends the first LLDP packet to the central processing unit 1211, and the central processing unit 1211 processes the first LLDP packet.

The central processing unit 1231 is further configured to control the network processor 1232 to obtain the forwarding entry in the forwarding entry memory 1234, and the central processing unit 1231 is further configured to control the network processor 1232 to send the first slice information and the second slice information to the management device through the physical interface card 1233.

It should be understood that actions on the interface board 1240 are consistent with actions on the interface board 1230 in this embodiment of the present invention. For brevity, details are not described. It should be understood that the second network device 1200 in this embodiment may correspond to the functions and/or the implemented steps in the foregoing method embodiments. Details are not described herein.

In addition, it should be noted that there may be one or more main control boards. When there are a plurality of main control boards, a primary main control board and a secondary main control board may be included. There may be one or more interface boards. A second network device having a stronger data processing capability provides more interface boards. There may also be one or more physical interface cards on the interface board. There may be no switching board or there may be one or more switching boards. When there are a plurality of switching boards, load sharing and redundancy backup may be implemented together. In a centralized forwarding architecture, there may be no switching board on the second network device, and the interface board provides a function of processing service data of an entire system. In a distributed forwarding architecture, there may be at least one switching board on the second network device, and the switching board is used to implement data exchange between a plurality of interface boards, to provide a large-capacity data exchange and processing capability. Therefore, a data access and processing capability of the second network device in the distributed architecture is higher than that of the second network device in the centralized architecture. A specific architecture that is to be used depends on a specific networking deployment scenario, and is not limited herein.

In addition, an embodiment of this application provides a computer storage medium. The computer storage medium is configured to store computer software instructions used by the foregoing second network device, and includes a program designed for performing the foregoing method embodiments.

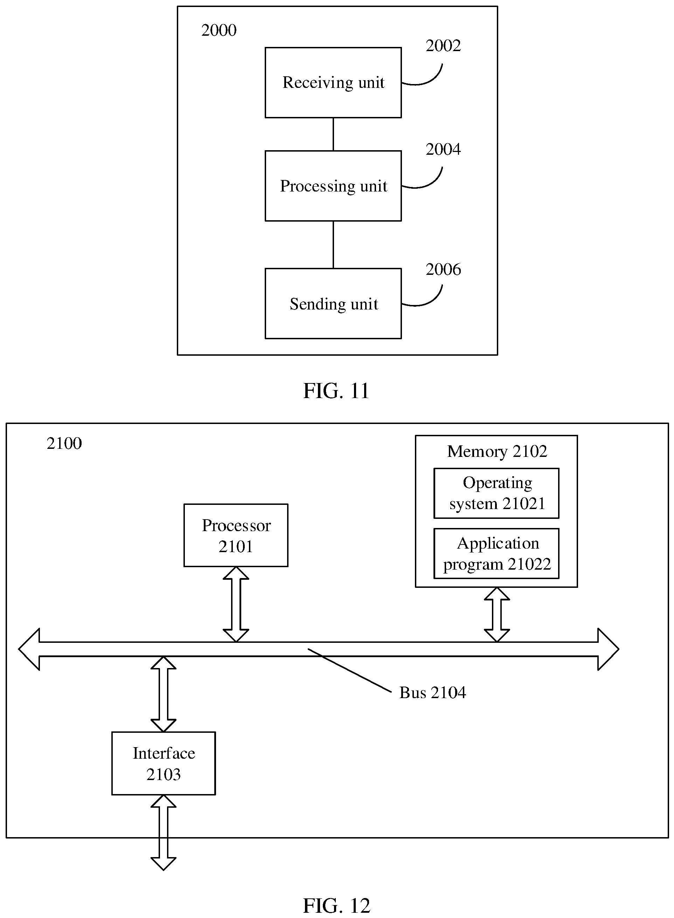

FIG. 11 is a schematic structural diagram of a management device 2000 according to an embodiment of this application. The management device 2000 shown in FIG. 11 can perform corresponding steps performed by the management device in the methods in the foregoing embodiments. The management device is deployed in a communications network, and the communications network further includes a first network device and a second network device. As shown in FIG. 11, the management device 2000 includes a receiving unit 2002 and a processing unit 2004.

The receiving unit 2002 is configured to receive first slice information and second slice information that are sent by a second network device. The first slice information is used to indicate a network slice to which a first port of the first network device belongs, and the second slice information is used to indicate a network slice to which a second port of the second network device belongs.

The receiving unit 2002 is further configured to receive the first slice information and the second slice information that are sent by the first network device.

The processing unit 2004 is configured to determine, based on the first slice information and the second slice information that are received from the first network device and the first slice information and the second slice information that are received from the second network device, topology information of the network slices to which the first port and the second port belong. The topology information indicates that the first port of the first network device is directly connected to the second port of the second network device.

Optionally, the management device further includes a sending unit 2006. The sending unit 2006 is configured to send a request message to the second network device before the receiving unit 2002 receives the first slice information and the second slice information that are sent by the second network device. The request message is used by the management device to request slice information from a network device managed by the management device.

Optionally, in the receiving, by the receiving unit 2002, the first slice information and the second slice information that are sent by the second network device, the receiving unit 2002 is specifically configured to receive a first notification message sent by the second network device. The first notification message includes the first slice information and the second slice information, and the first notification message is a NETCONF message.

Optionally, the receiving unit 2002 is further configured to receive third slice information sent by the second network device. The third slice information is used to indicate a network slice to which the first port of the first network device belongs at a second moment, the first slice information is used to indicate a network slice to which the first port of the first network device belongs at a first moment, and the first moment is different from the second moment. The processing unit 2004 is further configured to update, based on the third slice information and the second slice information, the topology information of the network slices to which the first port and the second port belong.

Optionally, in the receiving, by the receiving unit 2002, the third slice information sent by the second network device, the receiving unit 2002 is specifically configured to receive a second notification message sent by the second network device. The second notification message includes the third slice information, and the second notification message is an SNMP trap message.

Optionally, the first slice information includes a first slice identifier, the first slice identifier is used to identify the network slice to which the first port belongs, the second slice information includes a second slice identifier, the second slice identifier is used to identify the network slice to which the second port belongs, and the second slice identifier is the same as the first slice identifier.

Optionally, the first slice information further includes a first device identifier and a first port identifier, the first device identifier is used to indicate the first network device, the first port identifier is used to indicate the first port of the first network device, the second slice information further includes a second device identifier and a second port identifier, the second device identifier is used to indicate the second network device, and the second port identifier is used to indicate the second port of the second network device.

Optionally, the first slice information further includes a first port bandwidth, the first port bandwidth is used to indicate an available bandwidth of the first port, the second slice information further includes a second port bandwidth, and the second port bandwidth is used to indicate an available bandwidth of the second port.

Optionally, the topology information of the network slice to which the first port and the second port belong includes the first slice identifier.

Optionally, the first network device is an LLDP neighbor of the second network device.

The management device 2000 shown in FIG. 11 can perform corresponding steps performed by the management device in the methods in the foregoing embodiments. The management device separately receives the first slice information and the second slice information that are sent by the first network device and the second network device. Then the management device determines, based on the first slice information and the second slice information, the topology information of the network slice to which the first port and the second port belong. The topology information indicates that the first network device is directly connected to the second network device. In this way, the management device can obtain slice information from a managed device, and determine a topology of the managed device based on the obtained slice information.

FIG. 12 is a schematic structural diagram of hardware of a management device 2100 according to an embodiment of this application. The management device 2100 shown in FIG. 12 can perform corresponding steps performed by the management device in the method in the foregoing embodiments.

As shown in FIG. 12, the management device 2100 includes a processor 2101, a memory 2102, an interface 2103, and a bus 2104. The interface 2103 may be implemented in a wireless or wired manner. The processor 2101, the memory 2102, and the interface 2103 are connected through the bus 2104.

The interface 2103 may specifically include a transmitter and a receiver. The interface 2103 is configured to receive and send information or data between the management device and the second network device or the first network device in the foregoing embodiments. For example, the interface 2103 is configured to support receiving of first slice information and second slice information that are sent by the second network device. For another example, the interface 2103 is configured to support receiving of first slice information and second slice information that are sent by the first network device. For example, the interface 2103 is configured to support the processes S104 and S105 in FIG. 4B. The processor 2101 is configured to perform processing performed by the management device in the foregoing embodiments. For example, the processor 2101 is configured to: determine topology information of network slices based on the first slice information and the second slice information, and/or perform another process used for the technology described in this specification. For example, the processor 2101 is configured to support the process S106 in FIG. 4B. The memory 2102 includes an operating system 21021 and an application program 21022. The memory 2102 is configured to store a program, code, or instructions. When executing the program, the code, or the instructions, the processor or a hardware device can complete the processing process of the first network device in the foregoing method embodiments. Optionally, the memory 2102 may include a read-only memory (Read-only Memory, ROM) and a random access memory (Random Access Memory, RAM). The ROM includes a basic input/output system (Basic Input/Output System, BIOS) or an embedded system, and the RAM includes an application program and an operating system. When the management device 2100 needs to run, the BIOS built into the ROM or a bootloader in the embedded system is used to boot the system to start, and boot the management device 2100 to enter a normal running state. After the management device 2100 enters the normal running state, the application program and the operating system in the RAM are run, to complete processing procedures of the management device in the method embodiments.

It may be understood that FIG. 12 shows only a simplified design of the management device 2100. In actual application, the management device may include any quantity of interfaces, processors, or memories.

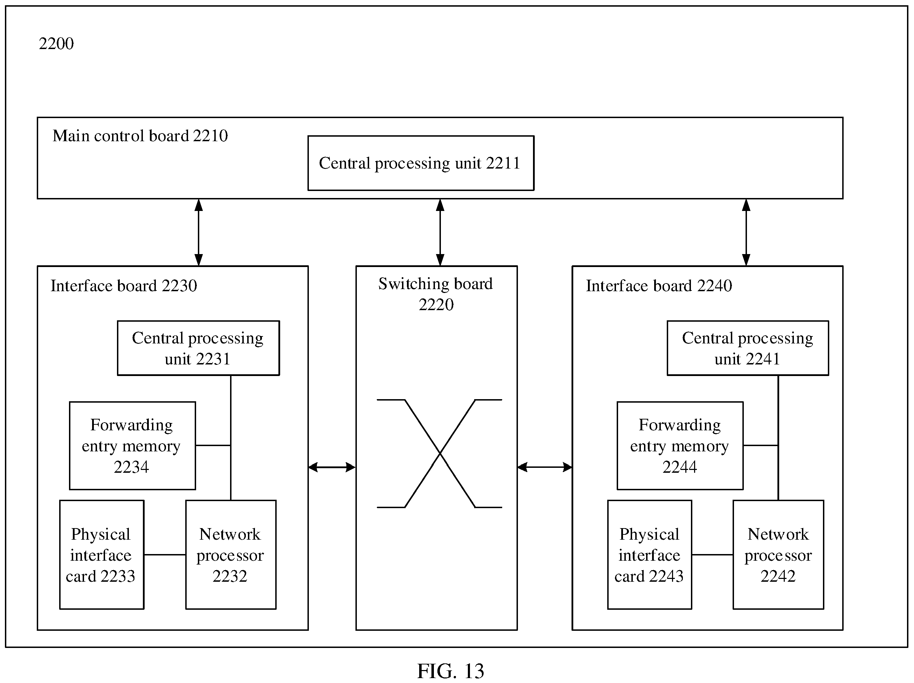

FIG. 13 is a schematic structural diagram of hardware of another management device 2200 according to an embodiment of this application. The management device 2200 shown in FIG. 13 can perform corresponding steps performed by the management device in the method in the foregoing embodiments.

As shown in FIG. 13, the management device 2200 includes a main control board 2210, an interface board 2230, a switching board 2220, and an interface board 2240. The main control board 2210, the interface board 2230, the interface board 2240, and the switching board 2220 are connected to a system backplane through a system bus for communication. The main control board 2210 is configured to complete functions such as system management, device maintenance, and protocol processing. The switching board 2220 is configured to exchange data between interface boards (where the interface board is also referred to as a line card or a service board). The interface board 2230 and the interface board 2240 are configured to provide various service interfaces (for example, a POS interface, a GE interface, and an ATM interface), and forward a data packet. In a possible implementation, the management device 2200 is a blade server.

The interface board 2230 may include a central processing unit 2231, a forwarding entry memory 2234, a physical interface card 2233, and a network processor 2232. The central processing unit 2231 is configured to control and manage the interface board, and communicate with a central processing unit 2211 on the main control board 2210. The forwarding entry memory 2234 is configured to store a forwarding entry. The physical interface card 2233 is configured to receive and send traffic. The network processor 2232 is configured to control, based on the forwarding entry, the physical interface card 2233 to receive and send the traffic.

Specifically, the physical interface card 2233 is configured to: receive first slice information and second slice information that are sent by the second network device, or receive first slice information and second slice information that are sent by the first network device. The physical interface card 2233 is further configured to send a request packet.

In a possible implementation, the central processing unit 2211 generates a request packet, and sends the request packet to the central processing unit 2231. After passing through the physical interface card 2233, the request packet is sent to the second network device and the first network device.

In another possible implementation, the physical interface card 2233 receives the first slice information and the second slice information, and the central processing unit 2231 processes the first slice information and the second slice information, and sends the first slice information and the second slice information to the central processing unit 2211.

The central processing unit 2231 is further configured to control the network processor 2232 to obtain the forwarding entry in the forwarding entry memory 2234, and the central processing unit 2231 is further configured to control the network processor 2232 to receive and send the traffic through the physical interface card 2233.

It should be understood that actions on the interface board 2240 are consistent with actions on the interface board 2230 in this embodiment of the present invention. For brevity, details are not described. It should be understood that the management device 2200 in this embodiment may correspond to functions and/or the implemented steps in the foregoing method embodiments. Details are not described herein.

In addition, it should be noted that there may be one or more main control boards. When there are a plurality of main control boards, a primary main control board and a secondary main control board may be included. There may be one or more interface boards. The first network device having a stronger data processing capability provides more interface boards. There may also be one or more physical interface cards on the interface board. There may be no switching board or there may be one or more switching boards. When there are a plurality of switching boards, load sharing and redundancy backup may be implemented together. In a centralized forwarding architecture, there may be no switching board on the first network device, and the interface board provides a function of processing service data of an entire system. In a distributed forwarding architecture, there may be at least one switching board on the first network device, and the switching board is used to implement data exchange between a plurality of interface boards, to provide a large-capacity data exchange and processing capability. Therefore, a data access and processing capability of the first network device in the distributed architecture is higher than that of the first network device in the centralized architecture. A specific architecture to be used depends on a specific networking deployment scenario, and is not limited herein.

In addition, an embodiment of this application provides a computer storage medium. The computer storage medium is configured to store computer software instructions used by the foregoing management device, and includes a program designed for performing the foregoing method embodiments.

An embodiment of this application further includes a network system. The network system includes a second network device and a management device. The second network device is the second network device in FIG. 8, FIG. 9, or FIG. 10, and the management device is the management device in FIG. 11, FIG. 12, or FIG. 13.

Method or algorithm steps described in combination with the content disclosed in this application may be implemented by hardware, or may be implemented by a processor by executing software instructions. The software instructions may be formed by a corresponding software module. The software module may be located in a RAM memory, a flash memory, a ROM memory, an EPROM memory, an EEPROM memory, a register, a hard disk, a removable magnetic disk, a CD-ROM, or a storage medium of any other form known in the art. For example, a storage medium is coupled to a processor, so that the processor can read information from the storage medium or write information into the storage medium. Certainly, the storage medium may be a component of the processor. The processor and the storage medium may be located in an ASIC. In addition, the ASIC may be located in user equipment. Certainly, the processor and the storage medium may exist in user equipment as discrete components.

A person skilled in the art should be aware that in one or more of the foregoing examples, the functions described in this application may be implemented by hardware or a combination of hardware and software. When this application is implemented by a combination of hardware and software, the software may be stored in a computer-readable medium or transmitted as one or more instructions or one or more pieces of code in a computer-readable medium. The computer-readable medium includes a computer storage medium and a communications medium. The communications medium includes any medium that enables a computer program to be transmitted from one place to another. The storage medium may be any available medium accessible to a general-purpose or dedicated computer.

The objectives, technical solutions, and beneficial effects of this application are further described in detail in the foregoing specific implementations. It should be understood that the foregoing descriptions are merely specific implementations of this application.

## Claims

1. A network topology discovery method, wherein the method is **characterized by**:
receiving (S102), by a second network device, a first link layer discovery protocol, LLDP, packet sent by a first network device, wherein the first LLDP packet comprises first slice information, and the first slice information is used to indicate a network slice to which a first port of the first network device belongs; and
sending (S103), by the second network device, the first slice information and second slice information to a management device, wherein the second slice information is used to indicate a network slice to which a second port of the second network device belongs.

2. The method according to claim 1, wherein before the sending (S103), by the second network device, the first slice information and second slice information to a management device, the method comprises:
receiving, by the second network device, a request message sent by the management device, wherein the request message is used by the management device to request slice information from a network device managed by the management device.

3. The method according to claim 1 or 2, wherein the sending (S103), by the second network device, the first slice information and second slice information to a management device comprises:
sending, by the second network device, a first notification message to the management device, wherein the first notification message comprises the first slice information and the second slice information, and the first notification message is a network configuration protocol, NETCONF, message.

4. The method according to any one of claims 1 to 3, wherein the method further comprises:
receiving, by the second network device, a third LLDP packet sent by the first network device, wherein the third LLDP packet comprises third slice information, the third slice information is used to indicate a network slice to which the first port of the first network device belongs at a second moment, the first slice information is used to indicate a network slice to which the first port of the first network device belongs at a first moment, and the first moment is different from the second moment; and
sending, by the second network device, the third slice information and the second slice information to the management device.

5. The method according to claim 4, wherein the sending, by the second network device, the third slice information and the second slice information to the management device comprises:
sending, by the second network device, a second notification message to the management device, wherein the second notification message comprises the third slice information and the second slice information, and the second notification message is a simple network management protocol, SNMP, trap message.

6. The method according to any one of claims 1 to 5, wherein the method further comprises:
sending, by the second network device, a second LLDP packet to the first network device, wherein the second LLDP packet comprises the second slice information.

7. The method according to any one of claims 1 to 6, wherein the first slice information comprises a first slice identifier, the first slice identifier is used to identify the network slice to which the first port belongs, the second slice information comprises a second slice identifier, the second slice identifier is used to identify the network slice to which the second port belongs, and the first slice identifier is the same as the second slice identifier.

8. The method according to claim 7, wherein the first slice information further comprises a first device identifier and a first port identifier, the first device identifier is used to indicate the first network device, the first port identifier is used to indicate the first port of the first network device, the second slice information further comprises a second device identifier and a second port identifier, the second device identifier is used to indicate the second network device, and the second port identifier is used to indicate the second port of the second network device.

9. The method according to any one of claims 1 to 8, wherein the first slice information further comprises a first port bandwidth, the first port bandwidth is used to indicate an available bandwidth of the first port, the second slice information further comprises a second port bandwidth, and the second port bandwidth is used to indicate an available bandwidth of the second port.

10. A network topology discovery method, wherein the method is **characterized by**:
receiving (S104), by a management device, first slice information and second slice information that are sent by a second network device, wherein the first slice information is used to indicate a network slice to which a first port of a first network device belongs, and the second slice information is used to indicate a network slice to which a second port of the second network device belongs;
receiving (S105), by the management device, the first slice information and the second slice information that are sent by the first network device; and
determining (S106), by the management device based on the first slice information and the second slice information that are received from the first network device and the first slice information and the second slice information that are received from the second network device, topology information of the network slices to which the first port and the second port belong, wherein the topology information indicates that the first port of the first network device is directly connected to the second port of the second network device.

11. The method according to claim 10, wherein before the receiving (S104), by a management device, first slice information and second slice information that are sent by a second network device, the method further comprises:
sending, by the management device, a request message to the second network device, wherein the request message is used by the management device to request slice information from a network device managed by the management device.

12. The method according to claim 10 or 11, wherein the receiving (S104), by a management device, first slice information and second slice information that are sent by a second network device comprises:
receiving, by the management device, a first notification message sent by the second network device, wherein the first notification message comprises the first slice information and the second slice information, and the first notification message is a network configuration protocol, NETCONF, message.

13. The method according to any one of claims 10 to 12, wherein the method further comprises:
receiving, by the management device, third slice information and the second slice information that are sent by the second network device, wherein the third slice information is used to indicate a network slice to which the first port of the first network device belongs at a second moment, the first slice information is used to indicate a network slice to which the first port of the first network device belongs at a first moment, and the first moment is different from the second moment; and
updating, by the management device based on the third slice information and the second slice information, the topology information of the network slices to which the first port and the second port belong.

14. The method according to claim 13, wherein the receiving, by the management device, third slice information and the second slice information that are sent by the second network device comprises:
receiving, by the management device, a second notification message sent by the second network device, wherein the second notification message comprises the third slice information and the second slice information, and the second notification message is a simple network management protocol, SNMP, trap message.

15. The method according to any one of claims 10 to 14, wherein the first slice information comprises a first slice identifier, the first slice identifier is used to identify the network slice to which the first port belongs, the second slice information comprises a second slice identifier, the second slice identifier is used to identify the network slice to which the second port belongs, and the second slice identifier is the same as the first slice identifier.

16. A second network device, wherein the second network device is **characterized by** comprising:
a receiving unit (1002), configured to receive a first link layer discovery protocol, LLDP, packet sent by a first network device, wherein the first LLDP packet comprises first slice information, and the first slice information is used to indicate a network slice to which a first port of the first network device belongs; and
a sending unit (1006), configured to send the first slice information and second slice information to a management device, wherein the second slice information is used to indicate a network slice to which a second port of the second network device belongs.

17. The second network device according to claim 16, wherein
before the sending unit (1006) sends the first slice information and the second slice information to the management device, the receiving unit (1002) is further configured to receive a request message sent by the management device, wherein the request message is used by the management device to request slice information from a network device managed by the management device.

18. The second network device according to claim16 or 17, wherein
in the sending, by the sending unit (1006), the first slice information and the second slice information to the management device, the sending unit (1006) is specifically configured to send a first notification message to the management device, wherein the first notification message comprises the first slice information and the second slice information, and the first notification message is a network configuration protocol, NETCONF, message.

19. A management device, wherein the management device is **characterized by** comprising:
a receiving unit (2002), configured to receive first slice information and second slice information that are sent by a second network device, wherein the first slice information is used to indicate a network slice to which a first port of
a first network device belongs, and the second slice information is used to indicate a network slice to which a second port of the second network device belongs; wherein
the receiving unit (2002) is further configured to receive the first slice information and the second slice information that are sent by the first network device; and
a processing unit (2006), configured to determine, based on the first slice information and the second slice information that are received from the first network device and the first slice information and the second slice information that are received from the second network device, topology information of the network slices to which the first port and the second port belong, wherein the topology information indicates that the first port of the first network device is directly connected to the second port of the second network device.

20. A network system, wherein the network system comprises a second network device and a management device, the second network device is the second network device according to any one of claims 16 to 18, and the management device is the management device according to claim 19.

## Patentansprüche

1. Netzwerktopologieentdeckungsverfahren, wobei das Verfahren **gekennzeichnet ist durch**:
Empfangen (S102), **durch** eine zweite Netzwerkvorrichtung, eines ersten Verbindungsschichtentdeckungsprotokoll(LLDP)-Pakets, das **durch** eine erste Netzwerkvorrichtung gesendet wird, wobei das erste LLDP-Paket erste Scheibeninformationen umfasst und die ersten Scheibeninformationen verwendet werden, um eine Netzwerkscheibe anzuzeigen, zu dem ein erster Anschluss der ersten Netzwerkvorrichtung gehört; und
Senden (S103), **durch** die zweite Netzwerkvorrichtung, der ersten Scheibeninformationen und der zweiten Scheibeninformationen an eine Verwaltungsvorrichtung, wobei die zweiten Scheibeninformationen verwendet werden, um eine Netzwerkscheibe anzuzeigen, zu dem ein zweiter Anschluss der zweiten Netzwerkvorrichtung gehört.

2. Verfahren nach Anspruch 1, wobei vor dem Senden (S103), durch die zweite Netzwerkvorrichtung, der ersten Scheibeninformationen und der zweiten Scheibeninformationen an eine Verwaltungsvorrichtung, das Verfahren umfasst:
Empfangen, durch die zweite Netzwerkvorrichtung, einer Anforderungsnachricht, die durch die Verwaltungsvorrichtung gesendet wird, wobei die Anforderungsnachricht durch die Verwaltungsvorrichtung verwendet wird, um Scheibeninformationen von einer Netzwerkvorrichtung, die durch die Verwaltungsvorrichtung verwaltet wird, anzufordern.

3. Verfahren nach Anspruch 1 oder 2, wobei das Senden (S103), durch die zweite Netzwerkvorrichtung, der ersten Scheibeninformationen und der zweiten Scheibeninformationen an eine Verwaltungsvorrichtung umfasst:
Senden, durch die zweite Netzwerkvorrichtung, einer ersten Benachrichtigungsnachricht an die Verwaltungsvorrichtung, wobei die erste Benachrichtigungsnachricht die ersten Scheibeninformationen und die zweiten Scheibeninformationen umfasst und die erste Benachrichtigungsnachricht eine Netzwerkkonfigurationsprotokoll(NETCONF)-Nachricht ist.

4. Verfahren nach einem der Ansprüche 1 bis 3, wobei das Verfahren ferner umfasst:
Empfangen, durch die zweite Netzwerkvorrichtung, eines dritten LLDP-Pakets, das durch die erste Netzwerkvorrichtung gesendet wird, wobei das dritte LLDP-Paket dritte Scheibeninformationen umfasst, wobei die dritten Scheibeninformationen verwendet werden, um eine Netzwerkscheibe anzuzeigen, zu der der erste Anschluss der ersten Netzwerkvorrichtung in einem zweiten Moment gehört, wobei die ersten Scheibeninformationen verwendet werden, um einen Netzwerkscheibe anzuzeigen, zu dem der erste Anschluss der ersten Netzwerkvorrichtung in einem ersten Moment gehört, und der erste Moment sich von dem zweiten Moment unterscheidet; und
Senden, durch die zweite Netzwerkvorrichtung, der dritten Scheibeninformation und der zweiten Scheibeninformation an die Verwaltungsvorrichtung.

5. Verfahren nach Anspruch 4, wobei das Senden, durch die zweite Netzwerkvorrichtung, der dritten Scheibeninformation und der zweiten Scheibeninformation an die Verwaltungsvorrichtung umfasst:
Senden, durch die zweite Netzwerkvorrichtung, einer zweiten Benachrichtigungsnachricht an die Verwaltungsvorrichtung, wobei die zweite Benachrichtigungsnachricht die dritten Scheibeninformationen und die zweiten Scheibeninformationen umfasst und die zweite Benachrichtigungsnachricht eine einfache Netzwerkverwaltungsprotokoll(SNMP)-Trap-Nachricht ist.

6. Verfahren nach einem der Ansprüche 1 bis 5, wobei das Verfahren ferner umfasst:
Senden, durch die zweite Netzwerkvorrichtung, eines zweiten LLDP-Pakets an die erste Netzwerkvorrichtung, wobei das zweite LLDP-Paket die zweiten Scheibeninformationen umfasst.

7. Verfahren nach einem der Ansprüche 1 bis 6, wobei die ersten Scheibeninformationen eine erste Scheibenkennung umfassen, wobei die erste Scheibenkennung verwendet wird, um die Netzwerkscheibe zu kennzeichnen, zu der der erste Anschluss gehört, wobei die zweiten Scheibeninformationen eine zweite Scheibenkennung umfassen, wobei die zweite Scheibenkennung verwendet wird, um die Netzwerkscheibe zu kennzeichnen, zu der der zweite Anschluss gehört, und die erste Scheibenkennung die gleiche ist wie die zweite Scheibenkennung.

8. Verfahren nach Anspruch 7, wobei die ersten Scheibeninformationen ferner eine erste Vorrichtungskennung und eine erste Anschlusskennung umfassen, wobei die erste Vorrichtungskennung verwendet wird, um die erste Netzwerkvorrichtung anzuzeigen, wobei die erste Anschlusskennung verwendet wird, um den ersten Anschluss der ersten Netzwerkvorrichtung anzuzeigen, wobei die zweiten Scheibeninformationen ferner eine zweite Vorrichtungskennung und eine zweite Anschlusskennung umfassen, wobei die zweite Vorrichtungskennung verwendet wird, um die zweite Netzwerkvorrichtung anzuzeigen, und die zweite Anschlusskennung verwendet wird, um den zweiten Anschluss der zweiten Netzwerkvorrichtung anzuzeigen.

9. Verfahren nach einem der Ansprüche 1 bis 8, wobei die ersten Scheibeninformationen ferner eine erste Anschlussbandbreite umfassen, wobei die erste Anschlussbandbreite verwendet wird, um eine verfügbare Bandbreite des ersten Anschlusses anzuzeigen, wobei die zweiten Scheibeninformationen ferner eine zweite Anschlussbandbreite umfassen, und die zweite Anschlussbandbreite verwendet wird, um eine verfügbare Bandbreite des zweiten Anschlusses anzuzeigen.

10. Netzwerktopologieentdeckungsverfahren, wobei das Verfahren **gekennzeichnet ist durch**:
Empfangen (S104), **durch** eine Verwaltungsvorrichtung, von ersten Scheibeninformationen und zweiten Scheibeninformationen, die **durch** eine zweite Netzwerkvorrichtung gesendet werden, wobei die ersten Scheibeninformationen verwendet werden, um eine Netzwerkscheibe anzuzeigen, zu dem ein erster Anschluss einer ersten Netzwerkvorrichtung gehört, und die zweiten Scheibeninformationen verwendet werden, um eine Netzwerkscheibe anzuzeigen, zu dem ein zweiter Anschluss der zweiten Netzwerkvorrichtung gehört;
Empfangen (S105), **durch** die Verwaltungsvorrichtung, der ersten Scheibeninformationen und der zweiten Scheibeninformationen, die **durch** die erste Netzwerkvorrichtung gesendet werden; und
Bestimmen (S106), **durch** die Verwaltungsvorrichtung basierend auf den ersten Scheibeninformationen und den zweiten Scheibeninformationen, die von der ersten Netzwerkvorrichtung empfangen werden, und den ersten Scheibeninformationen und den zweiten Scheibeninformationen, die von der zweiten Netzwerkvorrichtung gesendet werden, von Topologieinformationen der Netzwerkscheiben, zu denen der erste Anschluss und der zweite Anschluss gehören, wobei die Topologieinformationen anzeigen, dass der erste Anschluss der ersten Netzwerkvorrichtung mit dem zweiten Anschluss der zweiten Netzwerkvorrichtung direkt verbunden ist.

11. Verfahren nach Anspruch 10, wobei vor dem Empfangen (S104), durch eine Verwaltungsvorrichtung, von ersten Scheibeninformationen und zweiten Scheibeninformationen, die durch eine zweite Netzwerkvorrichtung gesendet werden, das Verfahren ferner umfasst:
Senden, durch die Verwaltungsvorrichtung, einer Anforderungsnachricht an die zweite Netzwerkvorrichtung, wobei die Anforderungsnachricht durch die Verwaltungsvorrichtung verwendet wird, um Scheibeninformationen von einer Netzwerkvorrichtung, die durch die Verwaltungsvorrichtung verwaltet wird, anzufordern.

12. Verfahren nach Anspruch 10 oder 11, wobei das Empfangen (S104), durch eine Verwaltungsvorrichtung, von ersten Scheibeninformationen und zweiten Scheibeninformationen, die durch eine zweite Netzwerkvorrichtung gesendet werden, umfasst:
Empfangen, durch die Verwaltungsvorrichtung, einer ersten Benachrichtigungsnachricht, die durch die zweite Netzwerkvorrichtung gesendet wird, wobei die erste Benachrichtigungsnachricht die ersten Scheibeninformationen und die zweiten Scheibeninformationen umfasst, und die erste Benachrichtigungsnachricht eine Netzwerkkonfigurationsprotokoll(NETCONF)-Nachricht ist.

13. Verfahren nach einem der Ansprüche 10 bis 12, wobei das Verfahren ferner umfasst:
Empfangen, durch die Verwaltungsvorrichtung, von dritten Scheibeninformationen und der zweiten Scheibeninformationen, die durch die zweite Netzwerkvorrichtung gesendet werden, wobei die dritten Scheibeninformationen verwendet werden, um eine Netzwerkscheibe anzuzeigen, zu dem der erste Anschluss der ersten Netzwerkvorrichtung in einem zweiten Moment gehört, wobei die ersten Scheibeninformationen verwendet werden, um eine Netzwerkscheibe anzuzeigen, zu dem der erste Anschluss der ersten Netzwerkvorrichtung in einem ersten Moment gehört, und wobei sich der erste Moment von dem zweiten Moment unterscheidet; und
Aktualisieren, durch die Verwaltungsvorrichtung basierend auf den dritten Scheibeninformationen und den zweiten Scheibeninformationen, der Topologieinformationen der Netzwerkscheiben, zu denen der erste Anschluss und der zweite Anschluss gehören.

14. Verfahren nach Anspruch 13, wobei das Empfangen, durch die Verwaltungsvorrichtung, von dritten Scheibeninformationen und der zweiten Scheibeninformationen, die durch die zweite Netzwerkvorrichtung gesendet werden, umfasst:
Empfangen, durch die Verwaltungsvorrichtung, einer zweiten Benachrichtigungsnachricht, die durch die zweite Netzwerkvorrichtung gesendet wird, wobei die zweite Benachrichtigungsnachricht die dritten Scheibeninformationen und die zweiten Scheibeninformationen umfasst, und die zweite Benachrichtigungsnachricht eine einfache Netzwerkverwaltungsprotokoll(SNMP)-Trap-Nachricht ist.

15. Verfahren nach einem der Ansprüche 10 bis 14, wobei die ersten Scheibeninformationen eine erste Scheibenkennung umfassen, wobei die erste Scheibenkennung verwendet wird, um die Netzwerkscheibe zu kennzeichnen, zu der der erste Anschluss gehört, wobei die zweiten Scheibeninformationen eine zweite Scheibenkennung umfassen, wobei die zweite Scheibenkennung verwendet wird, um die Netzwerkscheibe zu kennzeichnen, zu der der zweite Anschluss gehört, und die erste Scheibenkennung die gleiche ist wie die zweite Scheibenkennung.

16. Zweite Netzwerkvorrichtung, wobei die zweite Netzwerkvorrichtung **dadurch gekennzeichnet ist, dass** sie umfasst:
eine Empfangseinheit (1002), die konfiguriert ist, um ein erstes Verbindungsschichtentdeckungsprotokoll(LLDP)-Paket zu empfangen, das durch eine erste Netzwerkvorrichtung gesendet wird, wobei das erste LLDP-Paket erste Scheibeninformationen umfasst und die ersten Scheibeninformationen verwendet werden, um eine Netzwerkscheibe anzuzeigen, zu dem ein erster Anschluss der ersten Netzwerkvorrichtung gehört; und
eine Sendeeinheit (1006), die konfiguriert ist, um die ersten Scheibeninformationen und die zweiten Scheibeninformationen an eine Verwaltungsvorrichtung zu senden, wobei die zweiten Scheibeninformationen verwendet werden, um eine Netzwerkscheibe anzuzeigen, zu dem ein zweiter Anschluss der zweiten Netzwerkvorrichtung gehört.

17. Zweite Netzwerkvorrichtung nach Anspruch 16, wobei
bevor die Sendeeinheit (1006) die ersten Scheibeninformationen und die zweiten Scheibeninformationen an die Verwaltungsvorrichtung sendet, die Empfangseinheit (1002) ferner konfiguriert ist, um eine Anforderungsnachricht, die durch die Verwaltungsvorrichtung gesendet wird, zu empfangen, wobei die Anforderungsnachricht durch die Verwaltungsvorrichtung verwendet wird, um Scheibeninformationen von einer Netzwerkvorrichtung anzufordern, die durch die Verwaltungsvorrichtung verwaltet wird.

18. Zweite Netzwerkvorrichtung nach Anspruch 16 oder 17, wobei
bei dem Senden, durch die Sendeeinheit (1006), der ersten Scheibeninformationen und der zweiten Scheibeninformationen an die Verwaltungsvorrichtung, die Sendeeinheit (1006) speziell konfiguriert ist, um eine erste Benachrichtigungsnachricht an die Verwaltungsvorrichtung zu senden, wobei die erste Benachrichtigungsnachricht die ersten Scheibeninformationen und die zweiten Scheibeninformationen umfasst, und die erste Benachrichtigungsnachricht eine Netzwerkkonfigurationsprotokoll(NETCONF)-Nachricht ist.

19. Verwaltungsvorrichtung, wobei die Verwaltungsvorrichtung **dadurch gekennzeichnet ist, dass** sie umfasst:
eine Empfangseinheit (2002), die konfiguriert ist, um erste Scheibeninformationen und zweite Scheibeninformationen zu empfangen, die durch eine zweite Netzwerkvorrichtung gesendet werden, wobei die ersten Scheibeninformationen verwendet werden, um eine Netzwerkscheibe anzuzeigen, zu dem ein erster Anschluss einer ersten Netzwerkvorrichtung gehört, und die zweiten Scheibeninformationen verwendet werden, um eine Netzwerkscheibe anzuzeigen, zu dem ein zweiter Anschluss der zweiten Netzwerkvorrichtung gehört; wobei
die Empfangseinheit (2002) ferner konfiguriert ist, um die ersten Scheibeninformationen und die zweiten Scheibeninformationen zu empfangen, die durch die erste Netzwerkvorrichtung gesendet werden; und
eine Verarbeitungseinheit (2006), die konfiguriert ist, um basierend auf den ersten Scheibeninformationen und den zweiten Scheibeninformationen, die von der ersten Netzwerkvorrichtung empfangen werden, und den ersten Scheibeninformationen und den zweiten Scheibeninformationen, die von der zweiten Netzwerkvorrichtung empfangen werden, Topologieinformationen der Netzwerkscheiben zu bestimmen, zu denen der erste Anschluss und der zweite Anschluss gehören, wobei die Topologieinformationen anzeigen, dass der erste Anschluss der ersten Netzwerkvorrichtung mit dem zweiten Anschluss der zweiten Netzwerkvorrichtung direkt verbunden ist.

20. Netzwerksystem, wobei das Netzwerksystem eine zweite Netzwerkvorrichtung und eine Verwaltungsvorrichtung umfasst, wobei die zweite Netzwerkvorrichtung die zweite Netzwerkvorrichtung nach einem der Ansprüche 16 bis 18 ist und die Verwaltungsvorrichtung die Verwaltungsvorrichtung nach Anspruch 19 ist.

## Revendications

1. Procédé de découverte de topologie de réseau, le procédé étant **caractérisé par** :
la réception (S102), par un second dispositif réseau, d'un premier paquet de protocole de découverte de couche de liaison, LLDP, envoyé par un premier dispositif réseau, le premier paquet LLDP comprenant des premières informations de tranche, et les premières informations de tranche étant utilisées pour indiquer une tranche de réseau à laquelle appartient un premier port du premier dispositif réseau ; et
l'envoi (S103), par le second dispositif réseau, des premières informations de tranche et des deuxièmes informations de tranche à un dispositif de gestion, les deuxièmes informations de tranche étant utilisées pour indiquer une tranche de réseau à laquelle appartient un second port du second dispositif réseau.

2. Procédé selon la revendication 1, le procédé comprenant, avant l'envoi (S103), par le second dispositif réseau, des premières informations de tranche et des deuxièmes informations de tranche à un dispositif de gestion :
la réception, par le second dispositif réseau, d'un message de demande envoyé par le dispositif de gestion, le message de demande étant utilisé par le dispositif de gestion pour demander des informations de tranche à un dispositif réseau géré par le dispositif de gestion.

3. Procédé selon la revendication 1 ou 2, l'envoi (S103), par le second dispositif réseau, des premières informations de tranche et des deuxièmes informations de tranche à un dispositif de gestion comprenant :
l'envoi, par le second dispositif réseau, d'un premier message de notification au dispositif de gestion, le premier message de notification comprenant les premières informations de tranche et les deuxièmes informations de tranche, et le premier message de notification étant un message de protocole de configuration de réseau, NETCONF.

4. Procédé selon l'une quelconque des revendications 1 à 3, le procédé comprenant en outre :
la réception, par le second dispositif réseau, d'un troisième paquet LLDP envoyé par le premier dispositif réseau, le troisième paquet LLDP comprenant des troisièmes informations de tranche, les troisièmes informations de tranche étant utilisées pour indiquer une tranche de réseau à laquelle appartient le premier port du premier dispositif réseau à un second moment, les premières informations de tranche étant utilisées pour indiquer une tranche de réseau à laquelle appartient le premier port du premier dispositif réseau à un premier moment, et le premier moment étant différent du second moment ; et
l'envoi, par le second dispositif réseau, des troisièmes informations de tranche et des deuxièmes informations de tranche au dispositif de gestion.

5. Procédé selon la revendication 4, l'envoi, par le second dispositif réseau, des troisièmes informations de tranche et des deuxièmes informations de tranche au dispositif de gestion comprenant :
l'envoi, par le second dispositif réseau, d'un second message de notification au dispositif de gestion, le second message de notification comprenant les troisièmes informations de tranche et les deuxièmes informations de tranche, et le second message de notification étant un message d'interruption de protocole de gestion de réseau simple, SNMP.

6. Procédé selon l'une quelconque des revendications 1 à 5, le procédé comprenant en outre :
l'envoi, par le second dispositif réseau, d'un deuxième paquet LLDP au premier dispositif réseau, le deuxième paquet LLDP comprenant les deuxièmes informations de tranche.

7. Procédé selon l'une quelconque des revendications 1 à 6, les premières informations de tranche comprenant un premier identifiant de tranche, le premier identifiant de tranche étant utilisé pour identifier la tranche de réseau à laquelle appartient le premier port, les deuxièmes informations de tranche comprenant un second identifiant de tranche, le second identifiant de tranche étant utilisé pour identifier la tranche de réseau à laquelle appartient le second port, et le premier identifiant de tranche étant le même que le second identifiant de tranche.

8. Procédé selon la revendication 7, les premières informations de tranche comprenant en outre un premier identifiant de dispositif et un premier identifiant de port, le premier identifiant de dispositif étant utilisé pour indiquer le premier dispositif réseau, le premier identifiant de port étant utilisé pour indiquer le premier port du premier dispositif réseau, les deuxièmes informations de tranche comprenant en outre un second identifiant de dispositif et un second identifiant de port, le second identifiant de dispositif étant utilisé pour indiquer le second dispositif réseau, et le second identifiant de port étant utilisé pour indiquer le second port du second dispositif réseau.

9. Procédé selon l'une quelconque des revendications 1 à 8, les premières informations de tranche comprenant en outre une première bande passante de port, la première bande passante de port étant utilisée pour indiquer une bande passante disponible du premier port, les deuxièmes informations de tranche comprenant en outre une seconde bande passante de port, et la seconde bande passante de port étant utilisée pour indiquer une bande passante disponible du second port.

10. Procédé de découverte de topologie de réseau, le procédé étant **caractérisé par** :
la réception (S104), par un dispositif de gestion, de premières informations de tranche et de deuxièmes informations de tranche qui sont envoyées par un second dispositif réseau, les premières informations de tranche étant utilisées pour indiquer une tranche de réseau à laquelle appartient un premier port d'un premier dispositif réseau, et les deuxièmes informations de tranche étant utilisées pour indiquer une tranche de réseau à laquelle appartient un second port du second dispositif réseau ;
la réception (S105), par le dispositif de gestion, des premières informations de tranche et des deuxièmes informations de tranche qui sont envoyées par le premier dispositif réseau ; et
la détermination (S106), par le dispositif de gestion sur la base des premières informations de tranche et des deuxièmes informations de tranche qui sont reçues du premier dispositif réseau et des premières informations de tranche et des deuxièmes informations de tranche qui sont reçues du second dispositif réseau, d'informations de topologie des tranches de réseau auxquelles appartiennent le premier port et le second port, les informations de topologie indiquant que le premier port du premier dispositif réseau est directement connecté au second port du second dispositif réseau.

11. Procédé selon la revendication 10, le procédé comprenant en outre, avant la réception (S104), par un dispositif de gestion, des premières informations de tranche et des deuxièmes informations de tranche qui sont envoyées par un second dispositif réseau :
l'envoi, par le dispositif de gestion, d'un message de demande au second dispositif réseau, le message de demande étant utilisé par le dispositif de gestion pour demander des informations de tranche à un dispositif réseau géré par le dispositif de gestion.

12. Procédé selon la revendication 10 ou 11, la réception (S104), par un dispositif de gestion, de premières informations de tranche et de deuxièmes informations de tranche qui sont envoyées par un second dispositif réseau comprenant :
la réception, par le dispositif de gestion, d'un premier message de notification envoyé par le second dispositif réseau, le premier message de notification comprenant les premières informations de tranche et les deuxièmes informations de tranche, et le premier message de notification étant un message de protocole de configuration de réseau, NETCONF.

13. Procédé selon l'une quelconque des revendications 10 à 12, le procédé comprenant en outre :
la réception, par le dispositif de gestion, de troisièmes informations de tranche et des deuxièmes informations de tranche qui sont envoyées par le second dispositif réseau, les troisièmes informations de tranche étant utilisées pour indiquer une tranche de réseau à laquelle appartient le premier port du premier dispositif réseau à un second moment, les premières informations de tranche étant utilisées pour indiquer une tranche de réseau à laquelle appartient le premier port du premier dispositif réseau à un premier moment, et le premier moment étant différent du second moment ; et
la mise à jour, par le dispositif de gestion sur la base des troisièmes informations de tranche et des deuxièmes informations de tranche, des informations de topologie des tranches de réseau auxquelles appartiennent le premier port et le second port.

14. Procédé selon la revendication 13, la réception, par le dispositif de gestion, de troisièmes informations de tranche et des deuxièmes informations de tranche qui sont envoyées par le second dispositif réseau comprenant :
la réception, par le dispositif de gestion, d'un second message de notification envoyé par le second dispositif réseau, le second message de notification comprenant les troisièmes informations de tranche et les deuxièmes informations de tranche, et le second message de notification étant un message d'interruption de protocole de gestion de réseau simple, SNMP.

15. Procédé selon l'une quelconque des revendications 10 à 14, les premières informations de tranche comprenant un premier identifiant de tranche, le premier identifiant de tranche étant utilisé pour identifier la tranche de réseau à laquelle appartient le premier port, les deuxièmes informations de tranche comprenant un second identifiant de tranche, le second identifiant de tranche étant utilisé pour identifier la tranche de réseau à laquelle appartient le second port, et le second identifiant de tranche étant le même que le premier identifiant de tranche.

16. Second dispositif réseau, le second dispositif réseau étant **caractérisé en ce qu'**il comprend :
une unité de réception (1002), conçue pour recevoir un premier paquet de protocole de découverte de couche de liaison, LLDP, envoyé par un premier dispositif réseau, le premier paquet LLDP comprenant des premières informations de tranche, et les premières informations de tranche étant utilisées pour indiquer une tranche de réseau à laquelle appartient un premier port du premier dispositif réseau ; et
une unité d'envoi (1006), conçue pour envoyer les premières informations de tranche et des deuxièmes informations de tranche à un dispositif de gestion, les deuxièmes informations de tranche étant utilisées pour indiquer une tranche de réseau à laquelle appartient un second port du second dispositif réseau.

17. Second dispositif réseau selon la revendication 16,
l'unité de réception (1002) étant en outre conçue pour recevoir, avant que l'unité d'envoi (1006) n'envoie les premières informations de tranche et les deuxièmes informations de tranche au dispositif de gestion, un message de demande envoyé par le dispositif de gestion, le message de demande étant utilisé par le dispositif de gestion pour demander des informations de tranche à un dispositif réseau géré par le dispositif de gestion.

18. Second dispositif réseau selon la revendication 16 ou 17,
l'unité d'envoi (1006) étant spécifiquement conçue pour envoyer, lors de l'envoi, par l'unité d'envoi (1006), des premières informations de tranche et des deuxièmes informations de tranche au dispositif de gestion, un premier message de notification au dispositif de gestion, le premier message de notification comprenant les premières informations de tranche et les deuxièmes informations de tranche, et le premier message de notification étant un message de protocole de configuration de réseau, NETCONF.

19. Dispositif de gestion, le dispositif de gestion étant **caractérisé en ce qu'**il comprend :
une unité de réception (2002), conçue pour recevoir des premières informations de tranche et des deuxièmes informations de tranche qui sont envoyées par un second dispositif réseau, les premières informations de tranche étant utilisées pour indiquer une tranche de réseau à laquelle appartient un premier port d'un premier dispositif réseau, et les deuxièmes informations de tranche étant utilisées pour indiquer une tranche de réseau à laquelle appartient un second port du second dispositif réseau ;
l'unité de réception (2002) étant en outre conçue pour recevoir les premières informations de tranche et les deuxièmes informations de tranche qui sont envoyées par le premier dispositif réseau ; et
une unité de traitement (2006), conçue pour déterminer, sur la base des premières informations de tranche et des deuxièmes informations de tranche qui sont reçues du premier dispositif réseau et des premières informations de tranche et des deuxièmes informations de tranche qui sont reçues du second dispositif réseau, des informations de topologie des tranches de réseau auxquelles appartiennent le premier port et le second port, les informations de topologie indiquant que le premier port du premier dispositif réseau est directement connecté au second port du second dispositif réseau.

20. Système de réseau, le système de réseau comprenant un second dispositif réseau et un dispositif de gestion, le second dispositif réseau étant le second dispositif réseau selon l'une quelconque des revendications 16 à 18, et le dispositif de gestion étant le dispositif de gestion selon la revendication 19.
